# EUROPEAN PATENT APPLICATION

(11) **EP 4 297 307 A1**
(43) Date of publication of application: **27.12.2023**
(21) Application number: 22755575.2
(22) Date of filing: 18.02.2022
(51) Int. Cl.: H04L 1/00, H04L 9/08

(54) **METHOD FOR UPDATING CRYPTOGRAPHIC KEY, AND APPARATUS**

(30) Priority: 20.02.2021 CN 202110192864
(71) Applicant: Huawei Technologies Co., Ltd., Longgang Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Huawei European IPR
(86) International application number: PCT/CN2022/076726
(87) International publication number: WO 2022/174802

(57) **Abstract**

Embodiments of this application provide a key update method and apparatus. The key update method includes: generating a second multicast transmission key, where the second multicast transmission key is an updated key of a first multicast transmission key; and sending a first message, where the first message includes the second multicast transmission key and a multicast group identifier, and the first message indicates to update a multicast transmission key corresponding to the multicast group identifier to the second multicast transmission key. The key update method and apparatus in embodiments of this application can meet a key update requirement in a multicast transmission service, to further protect business interests of a service provider and improve system security.

## Description

This application claims priority to Chinese Patent Application No. 202110192864.8, filed with the China National Intellectual Property Administration on February 20, 2021 and entitled "KEY UPDATE METHOD AND APPARATUS", which is incorporated herein by reference in its entirety.

### TECHNICAL FIELD

Embodiments of this application relate to the communication field, and more specifically, to a key update method and apparatus.

### BACKGROUND

In a multicast service (multicast/broadcast service, MBS) network, same data needs to be sent to a plurality of user equipments (user equipments, UEs). Therefore, transmission security of multicast data becomes a focus in a communication technology. In a 5th generation (5th generation, 5G) communication system, end-to-end protection may be used for data transmission channels to meet a requirement on secure communication.

Use of a key in a multicast transmission service is an effective means to ensure security of a communication environment. However, how to update a key to meet a key update requirement in a multicast transmission service is a problem that needs to be urgently resolved currently.

### SUMMARY

Embodiments of this application provide a key update method and apparatus, to meet a key update requirement in a multicast transmission service, to further protect business interests of a service provider and improve system security.

According to a first aspect, a key update method is provided. The method includes: generating a second multicast transmission key, where the second multicast transmission key is an updated key of a first multicast transmission key; and sending a first message, where the first message includes the second multicast transmission key and a multicast group identifier, and the first message indicates to update a multicast transmission key corresponding to the multicast group identifier to the second multicast transmission key.

According to the solution provided in this application, the second multicast transmission key is generated, and the updated second multicast transmission key and the multicast group identifier corresponding to the second multicast transmission key are sent to another entity, to resolve a key update problem, and implement a key update requirement in a multicast transmission service.

It should be understood that after key update, the first multicast transmission key and the second multicast transmission key may be stored, or the first multicast transmission key may be deleted and the second multicast transmission key may be stored.

With reference to the first aspect, in some implementations of the first aspect, the generating a second multicast transmission key includes: generating the second multicast transmission key when an authorization of a user that joins a multicast service corresponding to the multicast group identifier changes.

For example, in this embodiment of this application, it may be understood that the second multicast transmission key is generated when an authorization of the user, user equipment, or a terminal device of the user that joins the multicast service corresponding to the multicast group identifier changes.

Optionally, it is determined that the authorization of the user that joins the multicast service corresponding to the multicast group identifier changes. When the authorization of the user that joins the multicast service corresponding to the multicast group identifier changes, the second multicast transmission key is generated.

With reference to the first aspect, in some implementations of the first aspect, the method further includes: receiving a second message, where the second message indicates that the authorization of the user that joins the multicast service corresponding to the multicast group identifier changes.

For example, in this embodiment of this application, a first network element may receive the second message from a unified data repository (unified data repository, UDR) function or a unified data management (unified data management, UDM) function.

With reference to the first aspect, in some implementations of the first aspect, the second message includes at least one of a list of users whose authorizations change, the multicast group identifier, a quantity of users whose authorizations change, and indication information indicating that the authorization changes.

With reference to the first aspect, in some implementations of the first aspect, the method further includes: subscribing to a notification service for the change of the authorization of the user that joins the multicast service corresponding to the multicast group identifier. In other words, when the authorization of the user that joins the multicast service corresponding to the multicast group identifier changes, the first network element receives the second message.

For example, in this embodiment of this application, the first network element subscribes to, from the unified data management function network element or the unified data repository function network element, the notification service for the change of the authorization of the user that joins the multicast service corresponding to the multicast group identifier.

With reference to the first aspect, in some implementations of the first aspect, the generating a second multicast transmission key includes: generating the second multicast transmission key when a preset condition is met.

It should be noted that the preset condition herein may be understood as a security rule decision.

Optionally, a first network element needs to determine the preset condition that needs to be met, and generate the second multicast transmission key when the preset condition is met.

With reference to the first aspect, in some implementations of the first aspect, the preset condition includes at least one of the following: use time of the multicast transmission key corresponding to the multicast group identifier reaches preset time, a quantity of use times reaches a preset quantity of times, a leakage risk exists in use, or leakage already occurs.

With reference to the first aspect, in some implementations of the first aspect, the first message further includes a second key identifier, and the second key identifier corresponds to the second multicast transmission key.

With reference to the first aspect, in some implementations of the first aspect, the method is performed by a first network element, and the sending a first message includes: The first network element sends the first message to a second network element. Alternatively, the first network element sends the first message to a third network element.

With reference to the first aspect, in some implementations of the first aspect, the method is performed by a multicast service function-control plane network element, and the sending a first message includes: The multicast service function-control plane network element sends the first message to a multicast service function-user plane network element. Alternatively, the multicast service function-control plane network element sends the first message to a multicast session management function network element.

With reference to the first aspect, in some implementations of the first aspect, the method further includes: receiving a third message, where the third message indicates to generate the second multicast transmission key; and the generating a second multicast transmission key further includes: generating the second multicast transmission key based on the third message.

For example, the first network element receives the third message from the second network element or the third network element.

It should be understood that, in this embodiment of this application, indication information may include a direct indication and an indirect indication. An indirect indication case may be understood as that a message that enables the first network element to generate the second multicast transmission key may be considered as indicating to generate the second multicast transmission key. For example, the third message indicates that a preset condition for generating a new key is met, and the first network element determines, based on the third message, to generate the second multicast transmission key. In this case, the third message is also considered as indicating to generate the second multicast transmission key.

For example, the method provided in the first aspect is performed by the first network element. The first network element includes a multicast/broadcast service function-control plane (multicast/broadcast service function-control plane, MBSF-C) network element, the second network element includes a multicast/broadcast service function-user plane (multicast/broadcast service function-user plane, MBSF-U) network element, and the third network element includes a multicast/broadcast session management function (multicast/broadcast session management function, MB-SMF) network element.

According to a second aspect, a key update method is provided. The method includes: receiving a second multicast transmission key, where the second multicast transmission key is an updated key of a first multicast transmission key; performing security protection on multicast data by using the second multicast transmission key; and sending the multicast data to a first terminal device.

It should be understood that the first terminal device is a terminal device having an authorization to join a multicast service corresponding to a multicast group identifier.

According to the solution provided in this application, the second multicast transmission key is received, and the multicast data is sent to the first terminal device, to resolve a key update problem, implement a key update requirement in a multicast transmission service, improve security of the multicast service, and prevent data leakage.

Optionally, a second network element may generate two pieces of redundant data after separately performing security protection on the multicast data by using the second multicast transmission key and the first multicast transmission key, and send the two pieces of redundant data to the first terminal device. This can ensure that the first terminal device that performs update in time can parse multicast traffic, to avoid a packet loss and improve user experience.

It should be understood that the second network element updates the second multicast transmission key immediately or a period of time after receiving a first message, to simplify a key activation procedure. Alternatively, the second network element may update the second multicast transmission key when receiving key update indication information sent by a third network element, to ensure, as much as possible, that an authorized user has obtained an updated key, avoid a signaling storm, improve user experience, and reduce a packet loss rate.

With reference to the second aspect, in some implementations of the second aspect, the receiving a second multicast transmission key includes: receiving a first message from a first network element, where the first message includes the second multicast transmission key and a multicast group identifier, and the first message indicates to update a multicast transmission key corresponding to the multicast group identifier to the second multicast transmission key.

With reference to the second aspect, in some implementations of the second aspect, the first message further includes a second key identifier, and the second key identifier corresponds to the second multicast transmission key.

With reference to the second aspect, in some implementations of the second aspect, the method further includes: sending a third message to the first network element when a preset condition is met, where the third message indicates the first network element to generate the second multicast transmission key.

With reference to the second aspect, in some implementations of the second aspect, the preset condition includes at least one of the following: use time of the multicast transmission key corresponding to the multicast group identifier reaches preset time, a quantity of use times reaches a preset quantity of times, a leakage risk exists in use, or leakage already occurs.

With reference to the second aspect, in some implementations of the second aspect, the method further includes: receiving a fifth message from a third network element, where the fifth message indicates a second network element to activate the second multicast transmission key; and activating the second multicast transmission key based on the fifth message.

For example, the method provided in the second aspect is performed by the second network element. The second network element includes a multicast/broadcast service function-user plane MBSF-U network element, the first network element includes a multicast/broadcast service function-control plane MBSF-C network element, and the third network element includes a multicast/broadcast session management function MB-SMF network element.

According to a third aspect, a key update method is provided. The method includes: receiving a second multicast transmission key and a multicast group identifier, where the second multicast transmission key is an updated key of a first multicast transmission key; and sending a fourth message to a first terminal device that has an authorization to join a multicast service corresponding to the multicast group identifier, where the fourth message indicates to update the first multicast transmission key, and the fourth message includes the second multicast transmission key and the multicast group identifier.

According to the solution provided in this application, the second multicast transmission key and the multicast group identifier are received, the first terminal device is determined based on the second multicast transmission key and the multicast group identifier, and the fourth message is sent to the first terminal device, to resolve a key update problem, and implement a key update requirement in a multicast transmission service.

It should be understood that that the first terminal device is determined based on a first message indicates that a third network element maintains an authorized user list of a valid multicast session corresponding to the multicast group identifier, to facilitate key update.

With reference to the third aspect, in some implementations of the third aspect, the receiving a second multicast transmission key and a multicast group identifier includes: receiving a first message from a first network element, where the first message includes the second multicast transmission key and the multicast group identifier, and the first message indicates to update a multicast transmission key corresponding to the multicast group identifier to the second multicast transmission key.

With reference to the third aspect, in some implementations of the third aspect, a second message is received, where the second message indicates that an authorization of a user that joins the multicast service corresponding to the multicast group identifier changes.

For example, the third network element may receive the second message from a unified data repository function or a unified data management function.

With reference to the third aspect, in some implementations of the third aspect, the method further includes: subscribing to a notification service for the change of the authorization of the user that joins the multicast service corresponding to the multicast group identifier. In other words, when the authorization of the user that joins the multicast service corresponding to the multicast group identifier changes, the third network element receives the second message.

For example, in this embodiment of this application, the third network element subscribes to, from the unified data management function network element or the unified data repository function network element, the notification service for the change of the authorization of the user that joins the multicast service corresponding to the multicast group identifier.

With reference to the third aspect, in some implementations of the third aspect, the second message includes at least one of a list of users whose authorizations change, the multicast group identifier, a quantity of users whose authorizations change, and indication information indicating that the authorization changes.

With reference to the third aspect, in some implementations of the third aspect, the method further includes: sending a third message to the first network element when an authorized user corresponding to the multicast group identifier changes, where the third message indicates the first network element to generate the second multicast transmission key, and the third message includes at least one of the multicast group identifier, authorized user change information, and indication information for updating the first multicast transmission key.

With reference to the third aspect, in some implementations of the third aspect, the method further includes: sending a fifth message to a second network element, where the fifth message indicates the second network element to activate the second multicast transmission key.

With reference to the third aspect, in some implementations of the third aspect, the method further includes: determining activation time of the second multicast transmission key; and sending the fifth message to the second network element in the activation time.

With reference to the third aspect, in some implementations of the third aspect, the method further includes: receiving a response message for the fourth message from the first terminal device; and determining the activation time of the second multicast transmission key based on the response message.

With reference to the third aspect, in some implementations of the third aspect, the fourth message further includes a second key identifier, and the second key identifier corresponds to the second multicast transmission key.

With reference to the third aspect, in some implementations of the third aspect, the method further includes: receiving a sixth message from the first terminal device, where the sixth message includes the multicast group identifier, and the sixth message is used to request the second multicast transmission key corresponding to the multicast group identifier; and sending the second multicast transmission key to the first terminal device.

For example, the method provided in the third aspect is performed by the third network element. The third network element includes a multicast/broadcast session management function MB-SMF network element, the first network element includes a multicast/broadcast service function-control plane MBSF-C network element, and the second network element includes a multicast/broadcast service function-user plane MBSF-U network element.

According to a fourth aspect, a key update method is provided. The method includes: receiving a fourth message from a third network element, where the fourth message includes a second multicast transmission key and a multicast group identifier, the second multicast transmission key is an updated key of a first multicast transmission key, and the fourth message indicates to update a multicast transmission key corresponding to the multicast group identifier to the second multicast transmission key; receiving multicast data from a second network element; and performing undo security protection on the multicast data based on the fourth message.

It should be understood that the multicast data in this embodiment of this application is data obtained after security protection is performed on to-be-transmitted data in a multicast service by using the second multicast transmission key.

For example, the second network element performs confidentiality protection on the to-be-transmitted data in the multicast service by using the second multicast transmission key, to obtain a ciphertext through calculation, where the ciphertext is the multicast data.

For example, after performing confidentiality and integrity protection on the to-be-transmitted data in the multicast service by using the second multicast transmission key, the second network element obtains a ciphertext and a message authentication code through calculation, where the ciphertext and the message authentication code form the multicast data.

For example, a first terminal device performs decryption calculation on the multicast data by using the multicast transmission key, to obtain the to-be-transmitted data in the multicast service.

For example, a first terminal device performs decryption calculation and integrity protection check on the multicast data by using the multicast transmission key, to obtain the to-be-transmitted data in the multicast service.

According to the solution provided in this application, the fourth message is received from the third network element, the multicast data is received from the second network element, and the security protection is performed on the multicast data based on the fourth message, to resolve a key update problem, and implement a key update requirement in a multicast transmission service.

With reference to the fourth aspect, in some implementations of the fourth aspect, the fourth message further includes a second key identifier, and the second key identifier corresponds to the second multicast transmission key.

With reference to the fourth aspect, in some implementations of the fourth aspect, the method further includes: storing the second multicast transmission key and the first multicast transmission key.

It should be understood that the first terminal device does not obtain activation time of a network side for the second key identifier and the second multicast transmission key. Therefore, the first terminal device stores two sets of old and new keys, to ensure that the first terminal device can always parse the multicast data, to avoid a packet loss and improve user experience.

With reference to the fourth aspect, in some implementations of the fourth aspect, the method further includes: deleting the first multicast transmission key after performing undo security protection on the multicast data based on the fourth message.

It should be understood that, after receiving a multicast data packet carrying a new key identifier, the first terminal device deletes the old key and an old key identifier, to reduce user resource occupation and release useless data.

For example, the method provided in the fourth aspect is performed by the first terminal device. The second network element includes a multicast/broadcast service function-user plane MBSF-U network element, and the third network element includes a multicast/broadcast session management function MB-SMF network element.

According to a fifth aspect, a key update method is provided. The method includes: receiving multicast data and a second key identifier, where the multicast data corresponds to a second multicast transmission key; determining, based on the second key identifier, that the second multicast transmission key corresponding to the second key identifier does not exist; sending a sixth message to a third network element, where the sixth message includes a multicast group identifier, and the sixth message is used to request the second multicast transmission key corresponding to the multicast group identifier; and receiving the second multicast transmission key from the third network element.

For example, a first terminal device receives the multicast data and the second key identifier from a second network element.

It should be understood that after receiving a multicast data packet carrying an unknown key identifier, the first terminal device initiates a key request procedure. This can ensure that a user re-obtains an updated key in a scenario in which the user does not obtain the updated key, and therefore improve user experience and reduce a packet loss rate.

Optionally, after receiving the multicast data packet carrying the unknown key identifier, the first terminal device may re-initiate a multicast session establishment procedure based on a local policy. This can ensure that the user re-obtains the updated key in the scenario in which the user does not obtain the updated key, and therefore improve user experience and reduce the packet loss rate.

It should be noted that, in this embodiment of this application, the method provided in the fifth aspect is performed by the first terminal device. The second network element includes a multicast/broadcast service function-user plane MBSF-U network element, and the third network element includes a multicast/broadcast session management function MB-SMF network element.

According to a sixth aspect, a key update apparatus is provided. The apparatus includes: a processing unit, configured to generate a second multicast transmission key, where the second multicast transmission key is an updated key of a first multicast transmission key; and a transceiver unit, configured to send a first message, where the first message includes the second multicast transmission key and a multicast group identifier, and the first message indicates to update a multicast transmission key corresponding to the multicast group identifier to the second multicast transmission key.

It should be understood that after key update, the processing unit may store the first multicast transmission key and the second multicast transmission key, or may delete the first multicast transmission key and store the second multicast transmission key.

With reference to the sixth aspect, in some implementations of the sixth aspect, the first message further includes a second key identifier, and the second key identifier corresponds to the second multicast transmission key.

With reference to the sixth aspect, in some implementations of the sixth aspect, the processing unit is configured to generate the second multicast transmission key when an authorization of a user that joins a multicast service corresponding to the multicast group identifier changes.

For example, in this embodiment of this application, it may be understood that the second multicast transmission key is generated when an authorization of the user, user equipment, or a terminal device of the user that joins the multicast service corresponding to the multicast group identifier changes.

Optionally, it is determined that the authorization of the user that joins the multicast service corresponding to the multicast group identifier changes. When the authorization of the user that joins the multicast service corresponding to the multicast group identifier changes, the second multicast transmission key is generated.

With reference to the sixth aspect, in some implementations of the sixth aspect, the transceiver unit is further configured to receive a second message, where the second message indicates that the authorization of the user that joins the multicast service corresponding to the multicast group identifier changes.

For example, in this embodiment of this application, the transceiver unit may be configured to receive the second message from a unified data repository function or a unified data management function.

With reference to the sixth aspect, in some implementations of the sixth aspect, the second message includes:
at least one of a list of users whose authorizations change, the multicast group identifier, a quantity of users whose authorizations change, and indication information indicating that the authorization changes.

With reference to the sixth aspect, in some implementations of the sixth aspect, the processing unit is further configured to subscribe to a notification service for the change of the authorization of the user that joins the multicast service corresponding to the multicast group identifier. In other words, when the authorization of the user that joins the multicast service corresponding to the multicast group identifier changes, the transceiver unit is configured to receive the second message.

For example, in this embodiment of this application, the processing unit is configured to subscribe to, from the unified data management function network element or the unified data repository function network element, the notification service for the change of the authorization of the user that joins the multicast service corresponding to the multicast group identifier.

With reference to the sixth aspect, in some implementations of the sixth aspect, the processing unit is further configured to generate the second multicast transmission key when a preset condition is met.

With reference to the sixth aspect, in some implementations of the sixth aspect, the preset condition includes at least one of the following: use time of the multicast transmission key corresponding to the multicast group identifier reaches preset time, a quantity of use times reaches a preset quantity of times, a leakage risk exists in use, or leakage already occurs.

With reference to the sixth aspect, in some implementations of the sixth aspect, the apparatus is a first network element, and the transceiver unit is further configured to: send the first message to a second network element; or send the first message to a third network element.

With reference to the sixth aspect, in some implementations of the sixth aspect, the transceiver unit is further configured to receive a third message, where the third message indicates to generate the second multicast transmission key; and the processing unit is further configured to generate the second multicast transmission key based on the third message.

For example, the transceiver unit is configured to receive the third message from the second network element or the third network element.

It should be understood that, in this embodiment of this application, indication information may include a direct indication and an indirect indication. An indirect indication case may be understood as that a message that enables the processing unit to generate the second multicast transmission key may be considered as indicating to generate the second multicast transmission key. For example, the third message indicates that a preset condition for generating a new key is met, and the processing unit determines, based on the third message, to generate the second multicast transmission key. In this case, the third message is also considered as indicating to generate the second multicast transmission key.

With reference to the sixth aspect, in some implementations of the sixth aspect, the apparatus is a multicast service function-control plane network element, and the transceiver unit is further used by the multicast service function-control plane network element to send the first message to a multicast service function-user plane network element; or the transceiver unit is further used by the multicast service function-control plane network element to send the first message to a multicast session management function network element.

For example, the apparatus provided in the sixth aspect is the first network element. The first network element includes a multicast/broadcast service function-control plane MBSF-C network element, the second network element includes a multicast/broadcast service function-user plane MBSF-U network element, and the third network element includes a multicast/broadcast session management function MB-SMF network element.

According to a seventh aspect, a key update apparatus is provided. The apparatus includes: a transceiver unit, configured to receive a second multicast transmission key, where the second multicast transmission key is an updated key of a first multicast transmission key; and a processing unit, configured to perform security protection on multicast data by using the second multicast transmission key, where the transceiver unit is further configured to send the multicast data to a first terminal device.

It should be understood that the multicast data in this embodiment of this application is data obtained after security protection is performed on to-be-transmitted data in a multicast service by using the second multicast transmission key.

For example, the processing unit is configured to perform confidentiality protection on the to-be-transmitted data in the multicast service by using the second multicast transmission key, to obtain a ciphertext through calculation, where the ciphertext is the multicast data. For example, the processing unit is configured to: after performing confidentiality and integrity protection on the to-be-transmitted data in the multicast service by using the second multicast transmission key, obtain a ciphertext and a message authentication code through calculation, where the ciphertext and the message authentication code form the multicast data.

It should be further understood that the first terminal device is a terminal device having an authorization to join a multicast service corresponding to a multicast group identifier.

Optionally, the processing unit is configured to generate two pieces of redundant data after separately performing security protection on the multicast data by using the second multicast transmission key and the first multicast transmission key, and the transceiver unit is configured to send the two pieces of redundant data to the first terminal device. This can ensure that the first terminal device that performs update in time can parse multicast traffic, to avoid a packet loss and improve user experience.

With reference to the seventh aspect, in some implementations of the seventh aspect, the transceiver unit is further configured to receive a first message from a first network element, where the first message includes the second multicast transmission key and a multicast group identifier, and the first message indicates to update a multicast transmission key corresponding to the multicast group identifier to the second multicast transmission key.

With reference to the seventh aspect, in some implementations of the seventh aspect, the first message further includes a second key identifier, and the second key identifier corresponds to the second multicast transmission key.

With reference to the seventh aspect, in some implementations of the seventh aspect, the transceiver unit is further configured to send a third message to the first network element when a preset condition is met, where the third message indicates the first network element to generate the second multicast transmission key.

With reference to the seventh aspect, in some implementations of the seventh aspect, the preset condition includes at least one of the following: use time of the multicast transmission key corresponding to the multicast group identifier reaches preset time, a quantity of use times reaches a preset quantity of times, a leakage risk exists in use, or leakage already occurs.

With reference to the seventh aspect, in some implementations of the seventh aspect, the transceiver unit is further configured to receive a fifth message from a third network element, where the fifth message indicates the processing unit to activate the second multicast transmission key; and the processing unit is further configured to activate the second multicast transmission key based on the fifth message.

For example, the apparatus provided in the seventh aspect is a second network element. The second network element includes a multicast/broadcast service function-user plane MBSF-U network element, the first network element includes a multicast/broadcast service function-control plane MBSF-C network element, and the third network element includes a multicast/broadcast session management function MB-SMF network element.

According to an eighth aspect, a key update apparatus is provided. The apparatus includes: a transceiver unit, configured to receive a second multicast transmission key and a multicast group identifier, where the second multicast transmission key is an updated key of a first multicast transmission key, where the transceiver unit is further configured to send a fourth message to a first terminal device that has an authorization to join a multicast service corresponding to the multicast group identifier, where the fourth message indicates to update the first multicast transmission key, and the fourth message includes the second multicast transmission key and the multicast group identifier.

It should be understood that the apparatus further includes a processing unit, and the processing unit is configured to determine the first terminal device based on the second multicast transmission key and the multicast group identifier. This indicates that the apparatus maintains an authorized user list of a valid multicast session corresponding to the multicast group identifier, to facilitate key update.

With reference to the eighth aspect, in some implementations of the eighth aspect, the transceiver unit is further configured to receive a first message from a first network element, where the first message includes the second multicast transmission key and the multicast group identifier, and the first message indicates to update a multicast transmission key corresponding to the multicast group identifier to the second multicast transmission key.

With reference to the eighth aspect, in some implementations of the eighth aspect, the fourth message further includes a second key identifier, and the second key identifier corresponds to the second multicast transmission key.

With reference to the eighth aspect, in some implementations of the eighth aspect, the transceiver unit is further configured to receive a second message, where the second message indicates that an authorization of a user that joins the multicast service corresponding to the multicast group identifier changes.

For example, the transceiver unit may be configured to receive the second message from a unified data repository function or a unified data management function.

With reference to the third aspect, in some implementations of the third aspect, the processing unit is configured to subscribe to a notification service for the change of the authorization of the user that joins the multicast service corresponding to the multicast group identifier. In other words, when the authorization of the user that joins the multicast service corresponding to the multicast group identifier changes, the transceiver unit receives the second message.

It should be understood that, in this embodiment of this application, the processing unit is configured to subscribes to, from the unified data management function network element or the unified data repository function network element, the notification service for the change of the authorization of the user that joins the multicast service corresponding to the multicast group identifier.

With reference to the eighth aspect, in some implementations of the eighth aspect, the second message includes at least one of a list of users whose authorizations change, the multicast group identifier, a quantity of users whose authorizations change, and indication information indicating that the authorization changes.

With reference to the eighth aspect, in some implementations of the eighth aspect, the transceiver unit is further configured to send a third message to the first network element when an authorized user corresponding to the multicast group identifier changes, where the third message indicates the first network element to generate the second multicast transmission key, and the third message includes at least one of the multicast group identifier, authorized user change information, and indication information for updating the first multicast transmission key.

With reference to the eighth aspect, in some implementations of the eighth aspect, the transceiver unit is further configured to send a fifth message to a second network element, where the fifth message indicates the second network element to activate the second multicast transmission key.

With reference to the eighth aspect, in some implementations of the eighth aspect, the processing unit is configured to determine activation time of the second multicast transmission key; and the transceiver unit is further configured to send the fifth message to the second network element in the activation time.

With reference to the eighth aspect, in some implementations of the eighth aspect, the transceiver unit is further configured to receive a response message for the fourth message from the first terminal device; and the processing unit is further configured to determine the activation time of the second multicast transmission key based on the response message of the first terminal device.

With reference to the eighth aspect, in some implementations of the eighth aspect, the transceiver unit is further configured to receive a sixth message from the first terminal device, where the sixth message includes the multicast group identifier, and the sixth message is used to request the second multicast transmission key corresponding to the multicast group identifier; and the transceiver unit is further configured to send the second multicast transmission key to the first terminal device.

For example, the apparatus provided in the eighth aspect is a third network element. The third network element includes a multicast/broadcast session management function MB-SMF network element, the first network element includes a multicast/broadcast service function-control plane MBSF-C network element, and the second network element includes a multicast/broadcast service function-user plane MBSF-U network element.

According to a ninth aspect, a key update apparatus is provided. The apparatus includes: a transceiver unit, configured to receive a fourth message from a third network element, where the fourth message includes a second multicast transmission key and a multicast group identifier, the second multicast transmission key is an updated key of a first multicast transmission key, and the fourth message indicates to update a multicast transmission key corresponding to the multicast group identifier to the second multicast transmission key, where the transceiver unit is further configured to receive multicast data from a second network element; and a processing unit, configured to perform undo security protection on the multicast data based on the second message.

It should be understood that the multicast data in this embodiment of this application is data obtained after security protection is performed on to-be-transmitted data in a multicast service by using the second multicast transmission key.

For example, the processing unit is configured to perform decryption calculation on the multicast data by using the multicast transmission key, to obtain the to-be-transmitted data in the multicast service. For example, the processing unit is configured to perform decryption calculation and integrity protection check on the multicast data by using the multicast transmission key, to obtain the to-be-transmitted data in the multicast service.

With reference to the ninth aspect, in some implementations of the ninth aspect, the fourth message further includes a second key identifier, and the second key identifier corresponds to the second multicast transmission key.

With reference to the ninth aspect, in some implementations of the ninth aspect, the processing unit is further configured to store the second multicast transmission key and the first multicast transmission key.

It should be understood that the apparatus does not obtain activation time of a network side for the second key identifier and the second multicast transmission key. Therefore, the processing unit stores two sets of old and new keys, to ensure that the apparatus can always parse the multicast data, to avoid a packet loss and improve user experience.

With reference to the ninth aspect, in some implementations of the ninth aspect, the processing unit is further configured to delete the first multicast transmission key after performing undo security protection on the multicast data based on the second message.

It should be understood that, after a multicast data packet carrying a new key identifier is received, the processing unit is configured to delete the old key and an old key identifier, to reduce user resource occupation and release useless data.

For example, the apparatus provided in the ninth aspect is a first terminal device. The second network element includes a multicast/broadcast service function-user plane MBSF-U network element, and the third network element includes a multicast/broadcast session management function MB-SMF network element.

According to a tenth aspect, a key update apparatus is provided. The apparatus includes: a transceiver unit, configured to receive multicast data and a second key identifier, where the multicast data corresponds to a second multicast transmission key; and a processing unit, configured to determine, based on the second key identifier, that the second multicast transmission key corresponding to the second key identifier does not exist, where the transceiver unit is further configured to send a sixth message to a third network element, where the sixth message includes a multicast group identifier, and the sixth message is used to request the second multicast transmission key corresponding to the multicast group identifier; and the transceiver unit is further configured to receive the second multicast transmission key from the third network element.

For example, the transceiver unit is configured to receive the multicast data and the second key identifier from a second network element.

It should be understood that after a multicast data packet carrying an unknown key identifier is received, the processing unit is configured to initiate a key request procedure. This can ensure that a user re-obtains an updated key in a scenario in which the user does not obtain the updated key, and therefore improve user experience and reduce a packet loss rate.

Optionally, after the multicast data packet carrying the unknown key identifier is received, the processing unit may be configured to re-initiate a multicast session establishment procedure based on a local policy. This can ensure that the user re-obtains the updated key in the scenario in which the user does not obtain the updated key, and therefore improve user experience and reduce the packet loss rate.

It should be noted that, in this embodiment of this application, the apparatus provided in the tenth aspect is a first terminal device. The second network element includes a multicast/broadcast service function-user plane MBSF-U network element, and the third network element includes a multicast/broadcast session management function MB-SMF network element.

According to an eleventh aspect, a network device is provided. The network device includes a processor, and optionally further includes a memory. The processor is configured to control a transceiver to receive and send signals. The memory is configured to store a computer program. The processor is configured to invoke the computer program from the memory and run the computer program, to enable the network device to perform the method according to any one of the first aspect or the possible implementations of the first aspect, the method according to any one of the second aspect or the possible implementations of the second aspect, or the method according to any one of the third aspect or the possible implementations of the third aspect.

Optionally, there are one or more processors, and there are one or more memories.

Optionally, the memory may be integrated with the processor, or the memory and the processor are separately disposed.

Optionally, the network device further includes the transceiver, and the transceiver may be specifically a transmitter (transmitter) and a receiver (receiver).

According to a twelfth aspect, a terminal device is provided. The terminal device includes a processor, and optionally further includes a memory. The processor is configured to control a transceiver to receive and send signals. The memory is configured to store a computer program. The processor is configured to invoke the computer program from the memory and run the computer program, to enable the terminal device to perform the method according to any one of the fourth aspect or the possible implementations of the fourth aspect, or the method according to a possible implementation of the fifth aspect.

Optionally, there are one or more processors, and there are one or more memories.

Optionally, the memory may be integrated with the processor, or the memory and the processor are separately disposed.

Optionally, the terminal device further includes the transceiver, and the transceiver may be specifically a transmitter (transmitter) and a receiver (receiver).

According to a thirteenth aspect, a communication apparatus is provided. The apparatus includes a unit configured to implement the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, or the method according to a possible implementation of the fifth aspect.

According to a fourteenth aspect, a communication system is provided. The system includes: a network device configured to perform the method according to any one of the first aspect or the possible implementations of the first aspect, a network device configured to perform the method according to any one of the second aspect or the possible implementations of the second aspect, a network device configured to perform the method according to any one of the third aspect or the possible implementations of the third aspect, a terminal device configured to perform the method according to any one of the fourth aspect or the possible implementations of the fourth aspect, or a terminal device configured to perform the method according to a possible implementation of the fifth aspect.

According to a fifteenth aspect, a computer-readable storage medium is provided. The computer-readable storage medium stores a computer program or code. When the computer program or code is run on a computer, the computer is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, or the method according to a possible implementation of the fifth aspect.

According to a sixteenth aspect, a chip is provided. The chip includes at least one processor, and the at least one processor is coupled to a memory. The memory is configured to store a computer program. The processor is configured to invoke the computer program from the memory and run the computer program, to enable a network device on which the chip system is installed to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, or the method according to a possible implementation of the fifth aspect.

The chip may include an input circuit or interface configured to send information or data, and an output circuit or interface configured to receive information or data.

According to a seventeenth aspect, a computer program product is provided. The computer program product includes computer program code. When the computer program code is run by a network device, the network device is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, or the method according to a possible implementation of the fifth aspect.

### BRIEF DESCRIPTION OF DRAWINGS

FIG. 1 is a schematic diagram of an example of a communication system applicable to this application;
FIG. 2 is a schematic diagram of an example of establishing a multicast service applicable to this application;
FIG. 3 is a schematic diagram of an example of multicast security establishment applicable to this application;
FIG. 4 is a schematic diagram of an example of multicast authorization revocation applicable to this application;
FIG. 5 is a schematic diagram of an example of a key update method applicable to this application;
FIG. 6A to FIG. 6C are a schematic diagram of an example of a key update method applicable to this application;
FIG. 7A to FIG. 7C are a schematic diagram of another example of a key update method applicable to this application;
FIG. 8A to FIG. 8C are a schematic diagram of still another example of a key update method applicable to this application;
FIG. 9 is a schematic diagram of an example of a key update apparatus applicable to this application;
FIG. 10 is a schematic diagram of another example of a key update apparatus applicable to this application;
FIG. 11 is a schematic diagram of still another example of a key update apparatus applicable to this application;
FIG. 12 is a schematic diagram of still another example of a key update apparatus applicable to this application;
FIG. 13 is a schematic diagram of an example of a terminal device applicable to this application;
FIG. 14 is a schematic diagram of an example of a network device applicable to this application;
FIG. 15 is a schematic diagram of another example of a network device applicable to this application; and
FIG. 16 is a schematic diagram of still another example of a network device applicable to this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a future 5th generation 5G system or a new radio (new radio, NR) system. In addition, the technical solutions may be extended to similar wireless communication systems, such as a wireless fidelity (wireless fidelity, Wi-Fi) system, a worldwide interoperability for microwave access (worldwide interoperability for microwave access, WiMAX) system, and a cellular system related to the 3rd generation partnership project (3rd generation partnership project, 3GPP).

Usually, a conventional communication system supports a limited quantity of connections, and is easy to implement. However, with development of communication technologies, a mobile communication system not only supports conventional communication, but also supports, for example, device to device (device to device, D2D) communication, machine to machine (machine to machine, M2M) communication, machine type communication (machine type communication, MTC), and vehicle to everything (vehicle to everything, V2X) communication, for example, vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication.

In embodiments of this application, a terminal device communicates with an access network device by using an air interface technology, and may be user equipment (user equipment, UE), an access terminal, a subscriber unit, a subscriber station, a mobile station (mobile station, MS), a remote station, a remote terminal, a mobile device, a user terminal, a terminal (terminal), a wireless communication device, a user agent or a user apparatus, a soft terminal, or the like. The terminal device may alternatively be a cellular phone, a cordless phone, a session initiation protocol (session initiation protocol, SIP) phone, a wireless local loop (wireless local loop, WLL) station, a handheld (handheld) device with a wireless communication function, a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a laptop computer (laptop computer), a cordless phone (cordless phone) or a wireless local loop (wireless local loop, WLL) station, a machine type communication (machine type communication, MTC) terminal, a computing device or another processing device connected to a wireless modem, a vehicle-mounted device, a wearable device, another device that can access a network, a terminal device in a future 5G network, a terminal device in a future evolved public land mobile network (public land mobile network, PLMN), or the like. This is not limited in embodiments of this application.

In embodiments of this application, an access network device may be a device configured to communicate with a terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN network, or the like. This is not limited in embodiments of this application.

With the development of communication technologies, devices are gradually migrated to environments such as network functions virtualization (network functions virtualization, NFV) and microservices. A bus backplane for internal communication is no longer secure. Therefore, in the new communication environments, end-to-end protection needs to be used for data transmission channels inside the devices, to meet a requirement on secure communication.

Currently, the most popular security protocol for end-to-end protection running at a transport layer is a transport layer security (transport layer security, TLS) protocol/datagram transport layer security (datagram transport layer security, DTLS) protocol. The TLS/DTLS protocol is used to ensure security and data integrity for internet communication.

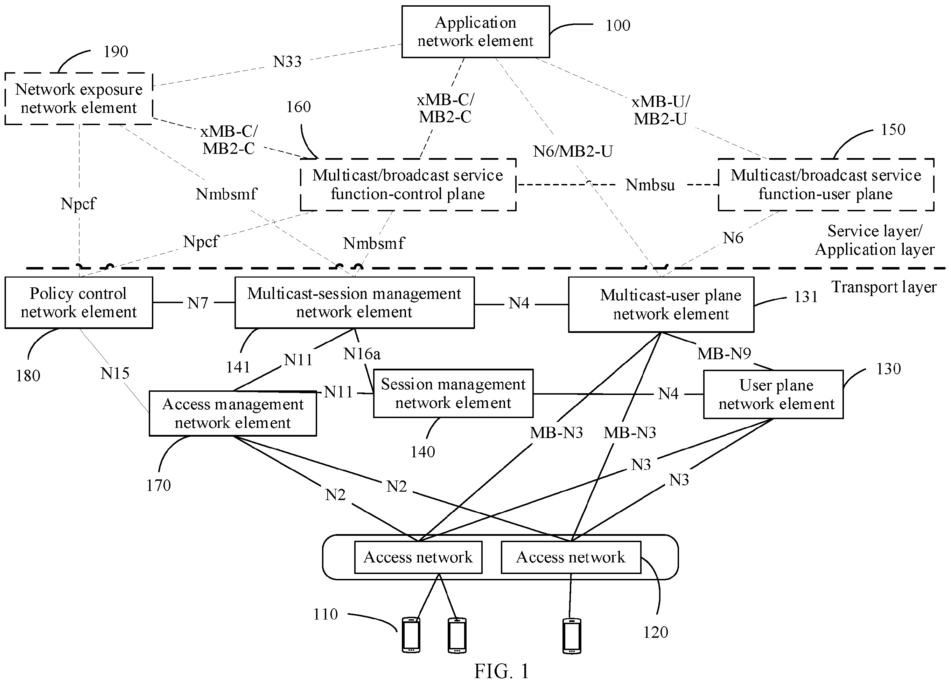

FIG. 1 is a schematic diagram of an example of a network architecture applicable to an embodiment of this application. As shown in FIG. 1, a part above a dashed line represents a service layer and/or an application layer, and a part below the dashed line represents a transport layer. A 5G MBS network architecture includes two parts: an access network and a core network. The access network is used to implement functions related to radio access. The core network mainly includes the following key network elements: an access and mobility management function (access and mobility management function, AMF) network element, a session management function (session management function, SMF) network element, a user plane function (user plane function, UPF) network element, a policy control function (policy control function, PCF) network element, and a unified data management UDM network element. The following separately describes network elements that may be involved in the network architecture.
1. An application network element 100 is mainly configured to support interaction with a 3GPP core network to provide services, for example, perform data routing affected by an application, access a network exposure function network element, and interact with a policy framework to perform policy control, to provide some third-party services for a network side. In a 5G communication system, the application network element may be an application function (application function, AF) network element. In a future communication system, the application network element may still be the AF network element, or may have another name. This is not limited in this application.
2. A terminal device 110 may include various handheld devices, vehicle-mounted devices, wearable devices, and computing devices that have a wireless communication function, or other processing devices connected to a wireless modem, and various forms of terminals, mobile station terminals, user equipments, soft terminals, and the like. For example, the terminal device 110 may be a water meter, an electricity meter, or a sensor.
3. A (radio) access network (radio access network, (R)AN) element 120 includes a RAN device and an AN device, and is mainly configured to provide a network access function for authorized terminal devices in a specific area, and can use transmission tunnels with different quality based on levels, service requirements, and the like of the terminal devices. The (R)AN element can manage radio resources and provide an access service for the terminal device, to forward a control signal and terminal device data between the terminal device and the core network. The (R)AN element may also be understood as a base station in a conventional network.
   The RAN device is mainly a wireless network device in a 3GPP network, and the AN device may be an access network device defined in non-3GPP. The radio access network device is mainly responsible for functions such as radio resource management, quality of service (quality of service, QoS) management, and data compression and encryption on an air interface side. The (R)AN device may include base stations in various forms, for example, a macro base station, a micro base station (also referred to as a small cell), a relay station, and an access point. In systems using different radio access technologies, names of a device that has a base station function may be different. For example, in a 5G system, the device is referred to as a RAN or a gNB (5GNodeB); in an LTE system, the device is referred to as an evolved NodeB (evolved NodeB, eNB or eNodeB); in a 3rd generation (3rd generation, 3G) system, the device is referred to as a NodeB (NodeB).
   It should be noted that the "network element" may also be referred to as an entity, software, a device, an apparatus, a module, or the like. This is not particularly limited in this application. In addition, in this application, for ease of understanding and description, the description of the "network element" is omitted in some descriptions. For example, the (R)AN element is briefly referred to as a (R)AN. In this case, the "(R)AN element" should be understood as a (R)AN element, a (R)AN entity, or (R)AN software. Descriptions of same or similar cases are omitted below.
4. A user plane function network element 130 mainly provides a service processing function of a user plane, and is configured to forward and receive user data in the terminal device, to be specific, perform packet routing and forwarding of data packets, function anchoring, quality of service QoS mapping and execution, uplink identification and routing of the uplink to a data network, downlink packet buffering and triggering of a notification of arrival of downlink data, and connection to an external data network, and the like. The user plane function network element 130 may receive user data from the data network and transmit the user data to the terminal device through the access network device, and may receive user data from the terminal device through the access network device and forward the user data to the data network.
   A transmission resource and a scheduling function in the UPF network element that are used to provide a service for the terminal device may be managed and controlled by the SMF network element. In a 5G communication system, the user plane network element may be a user plane function UPF network element. In a future communication system, the user plane network element may still be the UPF network element, or may have another name. This is not limited in this application.
5. A multicast/broadcast user plane function (multicast/broadcast user plane function, MB-UPF) network element 131 is responsible for forwarding and reception of multicast/broadcast user data in the terminal device. It should be noted that, in embodiments of this application, the MB-UPF and the UPF are not strictly distinguished, and an (MB-)UPF is used to represent the MB-UPF or the UPF.
6. The session management function (session management function, SMF) network element 160 is mainly used for session management, internet protocol (internet protocol, IP) address allocation and management of the terminal device, selection of a manageable user plane function, a termination point of a policy control and charging function interface, downlink data notification, and the like in a mobile network. For example, the SMF network element 160 is used for session establishment, modification, and release. For example, specific functions are allocation of an IP address to a user and selection of a UPF that provides a packet forwarding function. In a 5G communication system, the session management network element may be a session management function SMF network element. In a future communication system, the session management network element may still be the SMF network element, or may have another name. This is not limited in this application.
7. A multicast/broadcast session management function (multicast/broadcast session management function, MB-SMF) network element is a network element dedicated to multicast/broadcast session management and multicast/broadcast session transmission. The MB-SMF and the SMF may be independently deployed or may be integrated. It should be noted that, in embodiments of this application, the MB-SMF and the SMF are not strictly distinguished, and an (MB-)SMF may be used to represent the MB-SMF or the SMF.
8. A multicast/broadcast service function-user plane (multicast/broadcast service function-user plane, MBSF-U) 150 supports processing and distribution of multicast/broadcast service data traffic.
9. A multicast/broadcast service function-control plane (multicast/broadcast service function-control plane, MBSF-C) 160 supports a service layer function for a multicast/broadcast service, and interacts with the AF and the (MB-)SMF to complete MBS session operation and transmission.
10. The access and mobility management function network element 170 is mainly used for mobility management and access management in the mobile network, for example, user location update, user registration with a network, and user handover, and may be configured to implement functions in functions of a mobility management entity (mobility management entity, MME) other than session management, for example, functions such as lawful interception and access authorization/authentication. In a 5G communication system, the access management network element may be an access management function AMF network element. In a future communication system, the access management network element may still be the AMF network element, or may have another name. This is not limited in this application.
11. The policy control function network element 180 is mainly configured to: support providing a unified policy framework for guiding network behavior, provide policy rule information for a control plane function (Control Plane Function, CPF) network element (for example, the AMF network element or the SMF network element), and is responsible for obtaining user subscription information related to policy decision-making and the like. In a 4G communication system, the policy control network element may be a policy and charging rules function (policy and charging rules function, PCRF) network element. In a 5G communication system, the policy control network element may be a policy control function PCF network element. In a future communication system, the policy control network element may still be the PCF network element, or may have another name. This is not limited in this application.
12. The network exposure function network element 190 is mainly configured to securely expose a service and a capability provided by a 3GPP network function, and the exposure may be internal exposure, exposure to a third party, or the like. The network exposure function network element 190 may be a network exposure function (network exposure function, NEF) network element, or may have another name. This is not limited in this application.

It should be noted that the "network element" may also be referred to as an entity, a device, an apparatus, a module, or the like. This is not particularly limited in this application. In addition, in this application, for ease of understanding and description, the description of the "network element" is omitted in some descriptions. For example, the SMF network element is briefly referred to as an SMF for short. In this case, the "SMF" should be understood as an SMF network element or an SMF entity. Descriptions of same or similar cases are omitted below.

It may be understood that the network elements or the functions may be network elements in a hardware device, may be software functions running on dedicated hardware, or may be virtualized functions instantiated on a platform (for example, a cloud platform).

In the network architecture, an N2 interface is a reference point between the RAN element 120 and the AMF network element 170, and is configured to send a non-access stratum (non-access stratum, NAS) message and the like. An N3 interface is a reference point between the RAN element 120 and the UPF network element 130, and is configured to transmit user plane data and the like. An MB-N3 interface is a reference point between the MB-UPF network element 131 and the RAN element 120, and is configured to transmit multicast user plane data and the like. An N4 interface is a reference point between the (MB-)SMF network element and the (MB-)UPF network element, and is configured to transmit information such as tunnel identification information of an N3 connection, data buffering indication information, and a downlink data notification message.

It should be understood that the foregoing listed network elements included in a communication system are merely examples for description, and this application is not limited thereto. For example, the communication system may further include but is not limited to the following network elements.

13. A data network element is mainly configured to provide a network for data transmission. In a 5G communication system, the data network element may be a data network (data network, DN) element. In a future communication system, the data network element may still be the DN element, or may have another name. This is not limited in this application.

14. A network storage function network element is mainly configured to maintain realtime information of a network function service in the network. In a 5G communication system, the network storage network element may be a network registration function NRF network element. In a future communication system, the network storage network element may still be the network registration function (Network Repository Function, NRF), or may have another name. This is not limited in this application.

15. The unified data management network element is mainly configured to generate an authentication credential, process a user identifier (for example, store and manage a permanent identity of the user), perform access authentication control, manage subscription data, process a terminal device identifier, and perform registration and mobility management. In a 5G communication system, the data management network element may be a unified data management UDM network element. In a future communication system, the unified data management may still be the UDM network element, or may have another name. This is not limited in this application.

16. A group management network element is mainly configured to be responsible for creation and member management of a group (specifically, a terminal device group) of a mobile network local area network (local area network LAN), for example, a 5G LAN. In a 5G communication system, the group management network element may also be a group management function (Group Management Function, GMF) network element.

17. An authentication service function network element is mainly configured to perform an authentication service, generate a key to implement bidirectional authentication on the terminal device, and support a unified authentication framework. The authentication service function network element may be an authentication server function (authentication server function, AUSF) network element.

18. A network slice selection function network element is mainly configured to select a group of network slice instances for the user equipment, determine allowed network slice selection assistance information (network slice selection assistance information, NSSAI), and determine a set of AMFs that can serve the user equipment. The network slice selection function network element may be a network slice selection function (network slice selection function, NSSF) network element.

19. A binding support function network element is configured to search for a PCF associated with a session, and may be a binding support function (binding support function, BSF) network element.

20. A network data analytics function network element is mainly configured to: collect and store information from the terminal device, the RAN element, and another network entity (for example, the AMF network element), analyze the information, generate context information (which may be considered as information at the application layer) of the user, and distribute the information at the application layer. The network data analytics function network element may be a network data analytics function (network data analytics function, NWDAF) network element or the like.

It should be understood that a network architecture applied to embodiments of this application is not limited thereto. Any network architecture that can implement functions of the foregoing network elements is applicable to embodiments of this application.

For example, in some network architectures, network function entities such as an AMF, an SMF, a PCF, a GMF, and a UDM are all referred to as network function (network function, NF) network elements. Alternatively, in some other network architectures, a set of network elements such as an AMF, an SMF, a PCF, a GMF, and a UDM may be referred to as control plane function CPF network elements. Alternatively, in some other network architectures, a set of network elements such as an (MB-)SMF, an MBSF-C, an MBSF-U, and a UDM may be referred to as decision-making network elements.

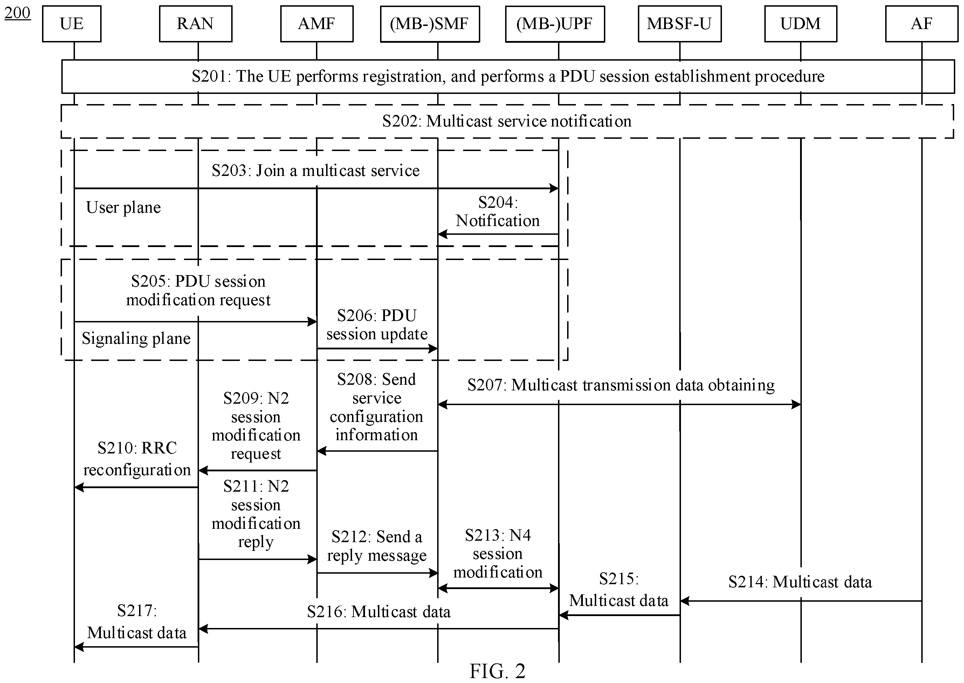

FIG. 2 is a schematic diagram of an example of multicast service establishment applicable to an embodiment of this application.

In a 3GPP network, a network needs to send same data to a plurality of user equipments, that is, point-to-multipoint data transmission. By establishing a multicast/broadcast transmission bearer, the network provides a bearer shared by a plurality of receivers. A sender may send one piece of data, and the sent data is replicated and transmitted to the plurality of receivers on a network side as required, or the data is sent to the plurality of receivers in a multicast transmission mode. As shown in FIG. 2, step 200 includes the following steps.

S201: UE registers with the network, and establishes a protocol data unit (Protocol Data Unit, PDU) session with an AF.

S202: A service provider may notify, through an upper layer (for example, an application layer), the UE that a multicast service starts to be provided, where a message includes at least a multicast group identifier (MBS group ID) that provides the multicast service, the multicast group identifier may also be referred to as a multicast session identifier (MBS Session ID), and the identifier may be a temporary mobile group identity (temporary mobile group identity, TMGI) or an MBS multicast session IP address. It should be understood that the multicast group identifier corresponds to the specific service.

S203 and S204: The UE joins the multicast service in a user plane manner, and a UPF serves as a multicast router. A message in step S203 triggers the UPF to notify an (MB-)SMF, and the message carries the multicast group identifier.

S205 and S206: The UE joins the multicast service in a signaling plane manner, and a signaling message may carry the multicast group identifier.

It should be noted that, the UE may select any one of the two manners in steps S203 and S204 and steps S205 and S206.

S207: The (MB-)SMF sends a message to a UDM, to request to check whether the UDM has a multicast context (for example, QoS information) that corresponds to the multicast group identifier and that can be provided.

For example, if the multicast context exists, the UDM sends the multicast context to the (MB-)SMF. If the multicast context does not exist, the UDM indicates the (MB-)SMF to create a multicast context. Then, the (MB-)SMF sends the multicast context to the UDM.

S208: The (MB-)SMF sends service configuration information to an AMF, where the service configuration information may include a multicast data specific QoS rule and the like.

S209: The AMF sends an N2 session modification request message to a RAN (for example, a gNB), where the request message carries the service configuration information.

S210: The RAN (for example, the gNB) receives the service configuration information from the AMF, and determines, based on common information in the service configuration information, whether the service can be used to transmit multicast data (for example, whether the corresponding service is a service that can be jointly received by a plurality of UEs). In addition, when a connection is established between the UE and the RAN, information such as a used resource and a frequency is included, that is, RRC reconfiguration is performed.

For example, if the service is used to transmit multicast data, a base station determines to associate the service with a common data channel, where the common data channel is located between the UPF in a core network and the base station. The common data channel may be established previously, or triggered to be established at this time. The data channel serves the UE that receives the service.

S211: The RAN sends an N2 session modification reply message to the AMF, where the reply message may include an IP address of the base station and a GTP-U TEID, and the GTP-U TEID may be understood as an ID of a transmission channel of the base station.

S212: The AMF sends a reply message to the (MB-)SMF, where the reply message may include the IP address of the base station and the GTP-U TEID.

S213: The (MB-)SMF performs N4 session modification with the UPF. To be specific, the (MB-)SMF configures the UPF to transmit data in a multicast session to the base station. Therefore, the UPF needs to establish a bearer based on the IP address of the base station and the GTP-U TEID, to transmit the data between the base station and the UPF.

It should be understood that, in the foregoing steps S211 to S213, data is sent to the base station through the UPF, and then sent by the base station to the UE. Therefore, the transmission channel needs to be established between the base station and the UPF, and both the IP address of the base station and the ID of the transmission channel need to be notified to the UPF, so that the transmission channel can be established.

S214: The AF sends multicast data to an MBSF-U. The MBSF-U may be an independent network element, or may be integrated with the UPF.

S215 to S217: The MBSF-U sends the multicast data to the UE through the (MB-)UPF and the RAN.

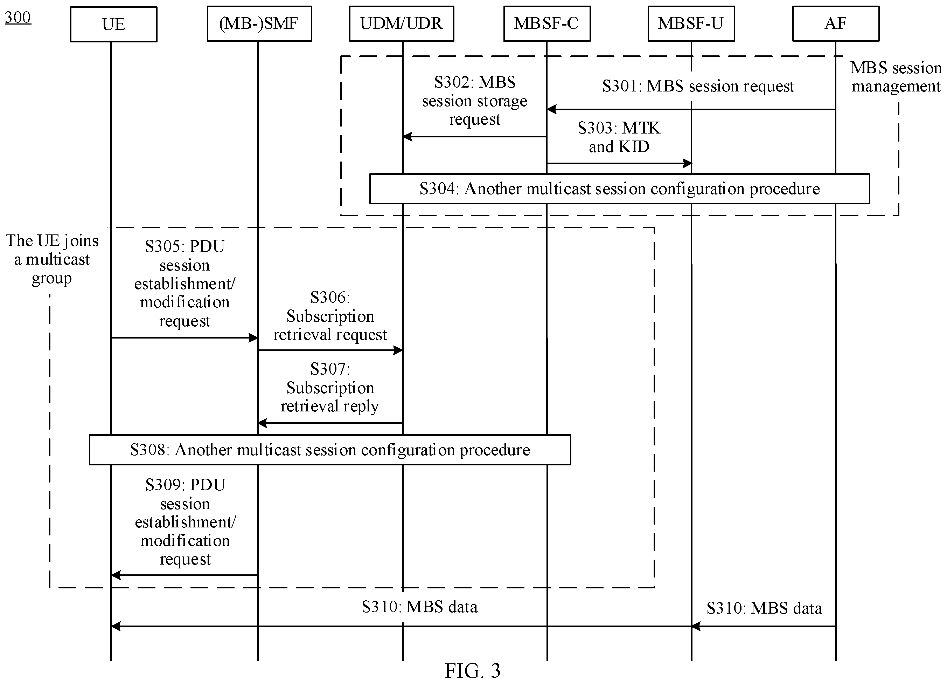

FIG. 3 is a schematic diagram of an example of multicast security establishment applicable to this application.

Transmission security of multicast data may depend on end-to-end security from UE to an MBSF-U. To be specific, an AF sends to-be-transmitted data to the MBSF-U, and the MBSF-U performs security protection on the data and then sends the data to the UE through a user plane. A multicast traffic key (multicast traffic key, MTK) is generated by an MBSF-C and distributed to the UE and the MBSF-U for use. As shown in FIG. 3, step 300 includes the following steps.

S301: The AF sends a multicast session request message to the MBSF-C, where the request message carries a multicast group identifier. Optionally, the request message carries a security policy, and the security policy indicates whether to perform encryption on data transmitted by a multicast group and/or whether to enable security protection.

S302: The MBSF-C generates a multicast traffic key MTK and a corresponding key identifier (key identifier, KID) for the multicast group, and sends the multicast group identifier, the MTK, and the KID to a UDM.

It should be noted that the multicast group identifier, the MTK, and the KID herein have a binding relationship. To be specific, one multicast group may correspond to a plurality of MTKs, and one MTK corresponds to only one multicast group. In addition, the MTK and the KID are in a one-to-one correspondence, and can be used only by the multicast group. This meets a security isolation requirement of multicast data.

S303: Correspondingly, the MBSF-C sends the multicast group identifier, the MTK, and the KID to the MBSF-U. The MBSF-U stores the MTK and the KID.

S304: Another multicast session configuration procedure is included. Details are not described herein.

It should be noted that the foregoing steps S301 to S304 are a process of configuring an MBS session.

S305: The UE sends a session establishment/modification request message to an (MB-)SMF, where the request message carries the multicast group identifier. For a specific process, refer to steps S203 to S206 in the method 200.

S306: The (MB-)SMF obtains the multicast data from the UDM, where a message carries the multicast group identifier. In this process, the purpose of the message is to obtain the MTK corresponding to the multicast group.

S307: The UDM checks the MTK corresponding to the multicast group identifier, and sends the MTK and the KID to the (MB-)SMF.

S308: Another multicast session configuration procedure is included. Details are not described herein.

S309: The (MB-)SMF sends a session establishment/modification request to the UE, where the message carries the multicast group identifier, the MTK, and the KID. For a specific process, refer to steps S208 to S210 in the method 200.

It should be noted that the foregoing steps S305 to S309 are a process in which the UE joins the multicast group, and correspond to steps S203 to S213 in the method 200.

S310 and S311: The AF sends to-be-transmitted data to the MBSF-U. After performing security protection on the data by using the MTK, the MBSF-U sends the KID and the data obtained after the security protection to the UE through the user plane. After receiving a multicast message, the UE first finds the corresponding MTK based on the KID, and then performs undo security protection on the data.

It should be noted that the multicast message carrying the multicast data includes only a downlink message and does not include an uplink message. For example, a base station may send a message to a plurality of user equipments through broadcasting, and the user equipment does not send a multicast message to the base station.

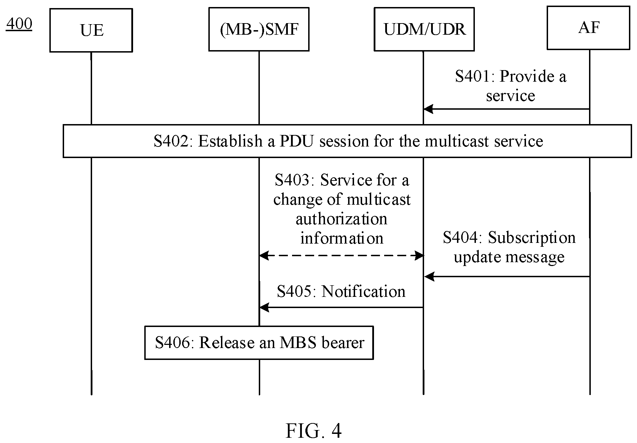

FIG. 4 is a schematic diagram of an example of multicast authorization revocation applicable to this application.

A 5G multicast service provides an authorization revocation function. For example, after a service contract of a user to an AF expires, the AF may revoke an authorization and release a multicast session. As shown in FIG. 4, step 400 includes the following steps.

S401: The AF provides a service for a UDM/LTDR. For a specific implementation, refer to steps S301 and S302 in the method 300.

S402: UE establishes a PDU session for the multicast service with the AF. For a specific implementation, refer to steps S303 to S309 in the method 300.

S403: An (MB-)SMF subscribes to a service that is in the UDM and that is related to a change of multicast authorization information.

S404: The AF sends a subscription update message to the UDM, where the message carries a list of users whose authorizations change. For example, the message may include a multicast group identifier and a user identifier. Optionally, the message may further include three attribute columns. The user identifier may be a generic public subscription identifier (generic public subscription identifier, GPSI) or the like, and an attribute may be authorization revocation or addition. When the AF is a third party, an NEF/MBSF-C serves as an intermediate network element to provide a transmission service for the AF and the UDM. This is not limited herein.

S405: After receiving the message in step S404, the UDM maps the user ID to a subscription permanent identifier (subscription permanent identifier, SUPI). Because the (MB-)SMF subscribes to the UDM service in step S403, the UDM sends, to the (MB-)SMF, the multicast group identifier and a list of SUPIs for which authorizations are revoked. Optionally, a carried attribute of the list may be authorization revocation.

It should be understood that this step is associated with S403, and this step is correspondingly performed only when step S403 is performed.

S406: The (MB-)SMF determines a multicast session of a target UE based on the SUPI and the multicast group identifier, and initiates a session release procedure to release a multicast session bearer of the target UE.

For example, the UE performs registration, executes a PDU session, and establishes security between networks. Optionally, the SMF subscribes to the service that is in the UDM and that is related to the change of the multicast authorization information. It is assumed that a use contract of a user for an application program expires, the AF sends information such as a user identifier, an attribute (for example, authorization revocation), and the application program to the UDM/UDR, and then the UDM/LTDR sends the information to the (MB-)SMF. The (MB-)SMF randomly releases a corresponding multicast session.

In a multicast transmission service, key update is important content, and a requirement of the key update includes but is not limited to an authorized user change and a security rule requirement. In terms of the authorized user change, after a service contract of a user to a service provider expires, if a key is not updated, the user can still normally parse multicast traffic data. As a result, interests of the service provider are impaired. In other words, confidentiality of the multicast data is not well resolved. In terms of the security rule requirement, from the perspective of security, a key has its own life cycle. In other words, use time and a quantity of use times of the key need to meet specific limits. After the limit is exceeded, the key needs to be updated to ensure same security strength as the original key.

In the multicast security establishment method 300, key distribution depends on the process in which the UE joins the multicast group, and how to update the key after the UE joins the multicast group is not involved. In the multicast authorization revocation method 400, only the multicast session release process during a user change is defined, and a key update process is not involved. As a result, the user whose authorization is revoked can still use an original key to parse multicast traffic data. Therefore, in the multicast transmission service, how to update a key to meet a multicast key update requirement is a problem that needs to be urgently resolved.

Embodiments of this application are applied to a communication system including at least one terminal device and a plurality of core network devices. A core network is mainly to provide a user connection, perform user management, and complete service bearing, and serves as a bearer network to provide an interface to an external network. Establishment of the user connection includes functions such as mobility management (mobility management, MM), call management (connection management, CM), switching/routing, and recording notification. The user management includes management of a user description, quality of service QoS, user communication accounting (accounting), a virtual home environment (Virtual Home Environment, VHE), and security (where an authentication center provides corresponding security measures, including security management for a mobile service and security processing for external network access). A bearer connection (access) includes a public switched telephone network (Public Switched Telephone Network, PSTN) that provides access to the outside, an external circuit data network, an external packet data network, the internet (internet), an intranet (intranet), a short message service (Short Message Service, SMS) server of a mobile network, and the like.

Basic services that can be provided by the core network include mobile office, e-commerce, communication, an entertainment service, a travel and location-based service, a telemetry (telemetry) service, a simple message transfer service (monitoring and control), and the like.

By way of example, and not limitation, the core network devices may include functional units such as an access and mobility management function AMF, a session management function SMF, a policy control function PCF, and a user plane function UPF. These functional units may work independently, or may be combined to implement some control functions. For example, the AMF, the SMF, and the PCF may be combined as a management device, to complete access control and mobility management functions such as access authentication, security encryption, and location registration of the terminal device, session management functions such as establishment, release, and modification of a user plane transmission path, and functions of analyzing some slice (slice)-related data (for example, congestion) and terminal device-related data.

With reference to the accompanying drawings, the following describes in detail how to implement a key update manner in embodiments of this application.

By way of example, and not limitation, in embodiments of this application, key update may be triggered by decision-making network elements such as an MBSF-C, an (MB-)SMF, an MBSF-U, and a UDM. For ease of description, in this application, the MBSF-C, the (MB-)SMF, and the MBSF-U are used as examples to describe a method for triggering multicast key update by a decision-making network element. In subsequent descriptions of this application, the MBSF-C may be replaced with a multicast/broadcast service function-control plane, the (MB-)SMF may be replaced with a (multicast/broadcast) session management function network element, and the MBSF-U may be replaced with a multicast/broadcast service function-user plane. For an implementation method in which an apparatus is a chip in the (MB-)SMF entity, a chip in the MBSF-C entity, or a chip in the MBSF-U entity, refer to specific descriptions in which the apparatus is the MBSF-C entity, the (MB-)SMF entity, or the MBSF-U entity. Details are not described again.

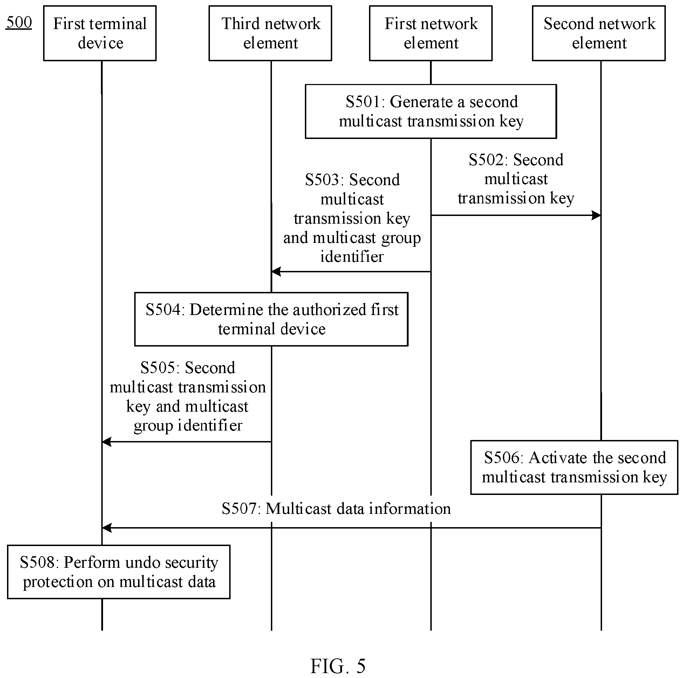

FIG. 5 is a schematic diagram of an example of a key update method applicable to this application.

S501: A first network element generates a second multicast transmission key.

The second multicast transmission key is an updated key of a first multicast transmission key, the second multicast transmission key is different from the first multicast transmission key, and the second multicast transmission key corresponds to a multicast group identifier.

In other words, the first network element first generates the first multicast transmission key. When determining that the first multicast transmission key needs to be updated, the first network element generates the second multicast transmission key to replace the first multicast transmission key.

It should be understood that the multicast group identifier corresponds to specific service information (for example, a specific multicast service). When user equipment UE joins a multicast session, a core network allocates the first multicast transmission key to the UE, where the first multicast transmission key corresponds to a first key identifier.

It should be noted that that the second multicast transmission key corresponds to the multicast group identifier, the multicast group identifier corresponds to the specific service information, and the first multicast transmission key corresponds to the first key identifier may be understood as follows: One multicast group may correspond to a plurality of multicast transmission keys, and one multicast transmission key corresponds to one multicast group identifier. In addition, the multicast transmission key and a key identifier are in a one-to-one correspondence, and can be used only by a corresponding multicast group. This meets a security isolation requirement of multicast data. In addition, a specific multicast group identifier and a specific service are also in a one-to-one correspondence.

It should be further understood that a trigger condition for generating the second multicast transmission key by the first network element includes at least one of the following: An authorization of a user that joins the multicast service corresponding to the multicast group identifier changes (that is, multicast authorization information changes), and a preset condition is met. In this embodiment of this application, the first network element may autonomously trigger and generate the second multicast transmission key, or may perform key update based on indication information of a second network element or a third network element.

In a possible implementation, the first network element determines that the authorization of the user that joins the multicast service corresponding to the multicast group identifier changes, and then generates the second multicast transmission key. Specifically, the first network element may receive a second message from a fourth network element (for example, a UDM network element or a UDR network element), where the second message indicates that the authorization of the multicast user corresponding to the multicast group identifier changes. In this case, the first network element may learn, based on the second message, that the authorization of the multicast user corresponding to the multicast group identifier changes, and then perform key update.

It should be noted that the second message herein may include at least one of a list of users whose authorizations change (in other words, a list of user equipments whose authorizations change), the multicast group identifier, a quantity of users whose authorizations change (in other words, a quantity of user equipments whose authorizations change), and indication information indicating that the authorization changes.

For example, the first network element may further subscribe to, from the fourth network element, a service for a change of the authorization of the user that joins the multicast service corresponding to the multicast group identifier.

In another possible implementation, the first network element determines that the preset condition is met, and then generates the second multicast transmission key. Specifically, the first network element may receive related information of the preset condition from the second network element, determine that the preset condition is met, and then perform key update.

The preset condition herein may include: Use time of the multicast transmission key corresponding to the multicast group identifier reaches preset time, a quantity of use times reaches a preset quantity of times, a leakage risk exists in use, or leakage already occurs. The related information of the preset condition may include: the use time of the multicast transmission key corresponding to the multicast group identifier, the quantity of use times, and indication information indicating that a leakage risk exists in use or leakage already occurs.

It should be noted that the preset condition herein may be determined according to a security rule. To be specific, the security rule may be that key update needs to be triggered after the use time of the multicast transmission key corresponding to the multicast group identifier reaches a threshold. Alternatively, the security rule may be that key update needs to be triggered after the quantity of use times of the multicast transmission key corresponding to the multicast group identifier reaches a threshold. Alternatively, the security rule may be that key update needs to be triggered when a leakage risk exists in use of the multicast transmission key corresponding to the multicast group identifier or leakage already occurs.

In still another possible implementation, when the authorization of the user that joins the multicast service corresponding to the multicast group identifier changes, the third network element sends a third message to the first network element. Correspondingly, the first network element receives the third message from the third network element, and generates the second multicast transmission key based on the third message. The third message indicates the first network element to generate the second multicast transmission key, and the third message includes at least one of the following: the multicast group identifier, authorized user change information, and indication information for updating the first multicast transmission key.

It should be noted that, in this embodiment of this application, it may be understood that the second multicast transmission key is generated when an authorization of the user, user equipment, or a terminal device of the user that joins the multicast service corresponding to the multicast group identifier changes.

In yet another possible implementation, when the preset condition is met, the second network element sends a third message to the first network element. Correspondingly, the first network element receives the third message from the second network element, and generates the second multicast transmission key based on the third message. The third message indicates the first network element to generate the second multicast transmission key, and the third message includes the multicast group identifier.

In other words, the first network element may autonomously determine, based on the foregoing trigger conditions that the authorization of the user that joins the multicast service corresponding to the multicast group identifier changes and the preset condition is met, whether to perform key update. Alternatively, the first network element may receive the third message from the third network element when the authorization of the user that joins the multicast service corresponding to the multicast group identifier changes, and perform key update based on the third message to generate the second multicast transmission key. Alternatively, the first network element may receive the third message from the second network element when the preset condition is met, and perform key update based on the third message to generate the second multicast transmission key.

S502: The first network element sends the second multicast transmission key to the second network element. Correspondingly, the second network element receives the second multicast transmission key from the first network element.

The second multicast transmission key is the updated key of the first multicast transmission key.

Optionally, the first network element sends a first message to the second network element. Correspondingly, the second network element receives the first message from the first network element. The first message includes the second multicast transmission key and the multicast group identifier, and the first message indicates to update a multicast transmission key corresponding to the multicast group identifier to the second multicast transmission key.

S503: The first network element sends the second multicast transmission key and the multicast group identifier to the third network element. Correspondingly, the third network element receives the second multicast transmission key and the multicast group identifier from the first network element.

Optionally, the third network element receives the first message from the first network element. The first message includes the second multicast transmission key and the multicast group identifier, and the first message indicates to update the multicast transmission key corresponding to the multicast group identifier to the second multicast transmission key.

It should be understood that there is no sequence between step S502 and step S503. In addition, the second network element and the third network element may send the second multicast transmission key and/or the multicast group identifier to each other.

Optionally, the first message may further include a second key identifier, and the second key identifier corresponds to the second multicast transmission key.

It should be noted that, in this embodiment of this application, the key identifier may be updated or may not be updated. For example, a network device may send the second multicast transmission key to the terminal device, and notify the terminal device of a correspondence between an updated key and a previous key identifier. In this way, signaling overheads on a network side can be reduced. However, a signaling storm may occur, causing a packet loss. This is not specifically limited in this application.

S504: The third network element determines, based on the multicast group identifier, a first terminal device having an authorization to join the multicast service corresponding to the multicast group identifier.

It should be understood that the first terminal device is a terminal device authorized to use the service corresponding to the multicast group identifier. In other words, the first terminal device is a terminal device corresponding to a user authorized to join the multicast service.

S505: The third network element sends a fourth message to the first terminal device. Correspondingly, the first terminal device receives the fourth message from the third network element.

The fourth message indicates to update the multicast transmission key corresponding to the multicast group identifier to the second multicast transmission key, and the fourth message includes the second multicast transmission key and the multicast group identifier.

S506: The second network element activates the second multicast transmission key.

It should be noted that a trigger condition for activating the second multicast transmission key may be: All terminal devices feed back, to the third network element, that the fourth message has been successfully received, or a quantity of feedback messages received by the third network element from terminal devices reaches a specific threshold. In this case, the third network element may send a fifth message to the second network element. Correspondingly, the second network element receives the fifth message from the third network element. The fifth message indicates the second network element to activate the second multicast transmission key.

Optionally, the fourth message may include the second key identifier, and the second key identifier corresponds to the second multicast transmission key.

It should be understood that, when the third network element sends the fourth message to the terminal device, a quantity of terminal devices is known. Therefore, the third network element may determine an update occasion of the second multicast transmission key based on information about the quantity of feedbacks received from the terminal devices. For example, the third network element may determine an activation occasion of the second multicast transmission key when successfully receiving response messages of all the terminal devices, and then send a key activation notification to the second network element. Alternatively, when a quantity of terminal devices from which response messages are received reaches 80%, the third network element may determine an activation occasion and indicate the second network element to activate the second multicast transmission key.

For example, before the second network element activates the second multicast transmission key, the third network element receives a response message for the fourth message from the first terminal device, and determines activation time of the second multicast transmission key based on the response message of the first terminal device.

In a possible implementation, the third network element determines the activation time of the second multicast transmission key, and sends the fifth message to the second network element in the activation time. Correspondingly, the second network element receives the fifth message from the third network element.

The fifth message indicates the second network element to activate the second multicast transmission key.

It should be understood that this implementation indicates that distribution and activation of the second multicast transmission key may be decoupled.

In another possible implementation, after receiving the second multicast transmission key from the first network element or the third network element, the second network element may immediately activate and use the second multicast transmission key. Alternatively, after receiving the second multicast transmission key, the second network element starts a timer, and activates and uses the second multicast transmission key after the timer expires. Alternatively, the first network element adds and triggers a timer when sending the second multicast transmission key to the second network element. This is not specifically limited in this application.

It should be understood that this implementation indicates that distribution and activation of the second multicast transmission key may be coupled.

S507: The second network element sends multicast data to the first terminal device. Correspondingly, the first terminal device receives the multicast data from the second network element. The multicast data corresponds to the second key identifier, and the second key identifier corresponds to the second multicast transmission key.

It should be understood that, in this embodiment of this application, that the multicast data corresponds to the second key identifier indicates that the multicast data is data obtained after security protection is performed on to-be-transmitted data in the multicast service by using the second multicast transmission key.

For example, the second network element performs confidentiality protection on the to-be-transmitted data in the multicast service by using the second multicast transmission key, to obtain a ciphertext through calculation, where the ciphertext is the multicast data.

For example, after performing confidentiality and integrity protection on the to-be-transmitted data in the multicast service by using the second multicast transmission key, the second network element obtains a ciphertext and a message authentication code through calculation, where the ciphertext and the message authentication code form the multicast data.

S508: The first terminal device performs undo security protection on the multicast data.

It should be understood that, in this embodiment of this application, the undo security protection means that the first terminal device performs decryption calculation on the multicast data by using the multicast transmission key, to obtain the to-be-transmitted data in the multicast service, or the first terminal device performs decryption calculation and integrity protection check on the multicast data by using the multicast transmission key, to obtain the to-be-transmitted data in the multicast service.

It should be noted that the multicast data can be successfully parsed only when the first terminal device successfully receives the fourth message.

In a possible implementation, when the first terminal device has successfully received the fourth message, the first multicast transmission key and the second multicast transmission key are stored, to avoid a problem that multicast traffic cannot be parsed, prevent a packet loss, and improve user experience.

In another possible implementation, when the first terminal device has successfully received the fourth message, the first multicast transmission key is deleted, where the first multicast transmission key corresponds to the first key identifier, to reduce signaling overheads on the network side.

In still another possible implementation, when the first terminal device does not successfully receive the fourth message, that is, in this case, the first terminal device does not have the second multicast transmission key and the second key identifier, the first terminal device cannot correctly parse a data packet after receiving the multicast data from the second network element. In this case, the first terminal device may send a sixth message to the third network element. Correspondingly, the third network element receives the sixth message from the first terminal device.

The sixth message includes the multicast group identifier, and the multicast data corresponds to the second multicast transmission key. The sixth message indicates that the first terminal device fails to parse the multicast data, or the sixth message is used to request, from the third network element, the second multicast transmission key corresponding to the multicast group identifier.

It should be understood that, in this embodiment of this application, that the multicast data corresponds to the second key identifier indicates that the multicast data is the data obtained after the security protection is performed on the to-be-transmitted data in the multicast service by using the second multicast transmission key.

Optionally, the first terminal device may re-establish a PDU session connection to a network, and establish security between the first terminal device and the network. Then, the entire process of key update is performed again.

It should be noted that, this embodiment of this application is applicable to a multicast transmission service, a broadcast transmission service, or a multicast transmission service.

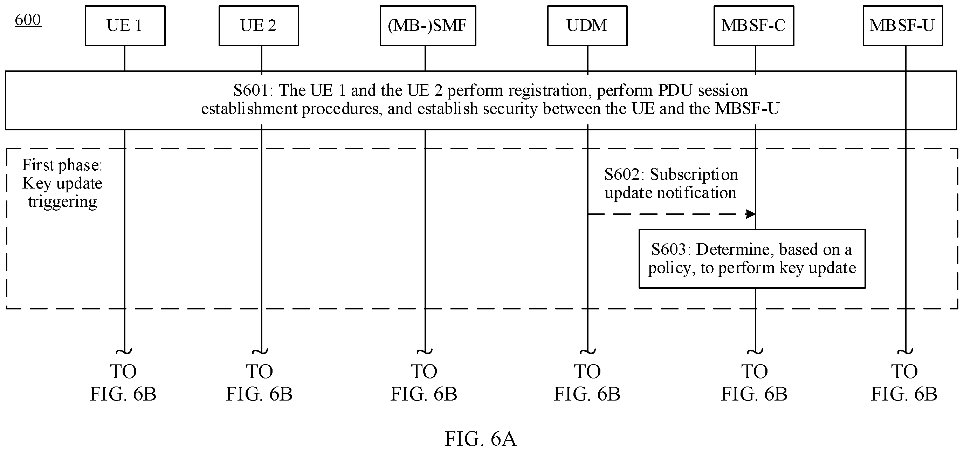

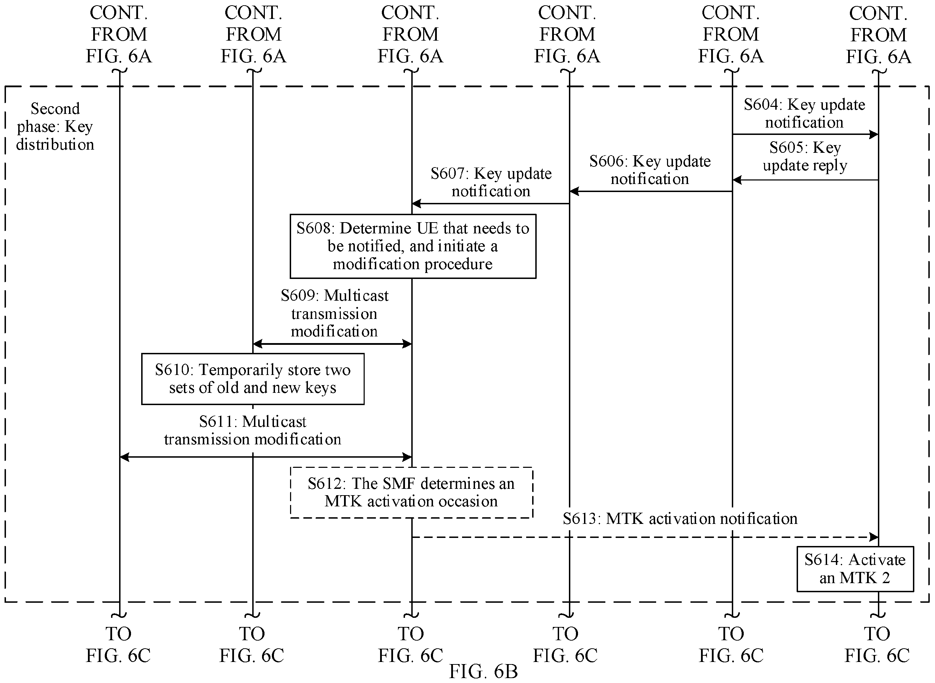

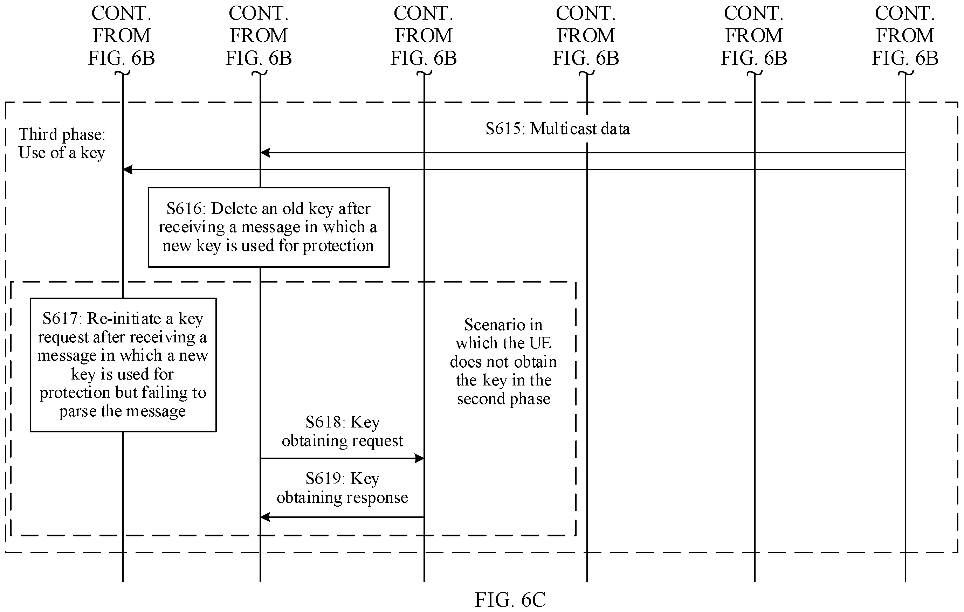

FIG. 6A to FIG. 6C are a schematic diagram of an example of a key update method applicable to this application.

Key update in a 5G multicast service mainly includes key update triggering, updated key distribution and activation, and use of a key on a UE side.

It should be noted that a decision-making network element that triggers the key update may be one or more of an (MB-)SMF, an MBSF-C, an MBSF-U, and a UDM. The MBSF-C is used as a control center and a key generation center of a multicast/broadcast service, and may be used as a decision-making network element. In this specific implementation, the MBSF-C is used as an example for description.

For updated key distribution, an updated key needs to be sent from the MBSF-C to the MBSF-U. Optionally, the key may alternatively be sent from a core network side to UE. It should be understood that a key activation process and a key distribution process on an MBSF-U side may be decoupled or coupled.

The use of the key on the UE side is described from two aspects: The UE successfully receives the updated key and the UE does not receive the updated key. As shown in FIG. 6A to FIG. 6C, step 600 includes the following steps.

S601: UE 1, UE 2, and UE n each establish a multicast session with a network (for example, an AF), and establish security between the UE and the MBSF-U, where a key used between the UE and the MBSF-U is referred to as an MTK 1 and a KID 1. For a specific process, refer to the methods 200 and 300. Details are not described herein again.

S602: The MBSF-C (that is, an example of a first network element) subscribes to a notification service that is in the UDM and that is for a change of an authorization of a user that joins a multicast service corresponding to a multicast group identifier. After the AF sends a subscription update message to the UDM, the UDM sends a subscription update notification message (that is, an example of a second message) to the MBSF-C.

For example, the subscription update notification message includes at least one of a list of users whose authorizations change (in other words, a list of user equipments whose authorizations change), the multicast group identifier, a quantity of users whose authorizations change (in other words, a quantity of user equipments whose authorizations change), and indication information indicating that the authorization changes, for example, a list of SUPIs.

Optionally, an attribute that is of the list and that is carried in the message may be authorization revocation.

S603: The MBSF-C triggers key update, and generates an updated key and an updated key identifier, namely, an MTK 2 and a KID 2, for the multicast session corresponding to the multicast group identifier.

For example, a manner of generating the key and the key identifier may be a random number generation method or the like. This is not limited herein.

It should be understood that the key identifier KID 2 herein may alternatively not be used for update, and the old key identifier continues to be used, provided that each authorized UE knows that the new key MTK 2 corresponds to the old key identifier KID 1. This is not specifically limited in this application.

It should be noted that, a determining action of the MBSF-C for triggering the key update may include the following two manners.

In a possible implementation, the MBSF-C determines, based on information about a user whose authorization is revoked, to perform key update.

For example, the MBSF-C receives the subscription update notification message sent by the UDM, and parses the subscription update notification message to obtain the information about the user whose authorization is revoked. The information may be the multicast group identifier and the list of SUPIs. When a quantity of users in the list of SUPIs reaches a threshold, the MBSF-C performs key update for the multicast session corresponding to the multicast group identifier.

It should be understood that the threshold herein may be set in advance. For example, the threshold is predefined in a local policy, and when the quantity of users in the list of SUPIs reaches 5, a key update action is triggered.

For example, the MBSF-C receives the subscription update notification message sent by the UDM, and parses the subscription update notification message to obtain the information about the user whose authorization is revoked. The information may be a quantity of users whose authorizations are revoked within a period of time for the multicast group identifier. The MBSF-C determines, based on the quantity of users, to perform key update.

It should be understood that the quantity of users herein may be set in advance. For example, the quantity of users is predefined in a local policy, and when the quantity of users whose authorizations are revoked within the period of time for the multicast group identifier reaches 10, a key update action is triggered.

For example, the UDM or the (MB-)SMF is used as an anchor for determining an authorized user change. When the UDM or the (MB-)SMF determines that a preset condition is met, the UDM or the (MB-)SMF sends the multicast group identifier and indication information to the MBSF-C, and the MBSF-C triggers, based on the indication information, the key update for the multicast session corresponding to the multicast group identifier.

It should be understood that an execution device of an action of determining the authorized user change herein is changed from the MBSF-C to the UDM or the (MB-)SMF, and the preset condition may be set in advance.

In another possible implementation, the MBSF-C determines, according to a security rule, to perform key update.

For example, the security rule is that key update needs to be triggered after use time of the MTK corresponding to the multicast group identifier reaches a threshold. A specific action may be as follows: After sending the MTK to the MBSF-U, the MBSF-C triggering a timer, where the timer may be bound to the multicast group identifier. After the timer expires, the MBSF-C determines to perform key update for the multicast session corresponding to the multicast group identifier.

For example, the security rule is that key update needs to be triggered after a quantity of use times of the MTK corresponding to the multicast group identifier reaches a threshold. A specific action may be as follows: The MBSF-C receives MTK use statistical information sent by the MBSF-U, where the information may be periodically reported. After the quantity of use times reaches the threshold, the MBSF-C determines to perform key update for the multicast session corresponding to the multicast group identifier.

For example, the security rule is that key update needs to be triggered when a leakage risk exists in use of the MTK corresponding to the multicast group identifier or leakage already occurs. A specific action may be as follows: The MBSF-C receives indication information sent by another network element. After receiving the indication information, the MBSF-C determines to perform key update for the multicast session corresponding to the multicast group identifier.

It should be understood that the threshold herein may be set in advance. For example, the threshold is predefined in a local policy. When the use time of the MTK exceeds 1 hour, or the quantity of use times of the MTK reaches 5, a key update action is triggered.

In the foregoing step S603, determining logic for triggering the key update is to trigger the key update based on the authorized user change or according to the security rule, and an execution entity is the MBSF-C. This can prevent a user from continuing to obtain multicast data in a scenario in which an authorization expires, and protect business interests of a service provider and confidentiality of the data. This further improves security of the multicast service and avoids data leakage.

S604: The MBSF-C sends the MTK 2 to the MBSF-U (that is, an example of a second network element), where the MTK 2 is an updated key of the MTK 1.

S605: The MBSF-U receives the MTK 2 from the MBSF-C, stores the MTK 2, and returns a response message to the MBSF-C.

Optionally, the MBSF-C sends the multicast group identifier and the KID 2 to the MBSF-U. Correspondingly, the MBSF-U receives the multicast group identifier and the KID 2 from the MBSF-C.

For example, a network device may mark keys that are sent and received in a plurality of times. For example, the MTK 1 and the KID 1 are marked as on_use, and the MTK 2 and the KID 2 are marked as new. For another example, time for obtaining MTKs and KIDs is marked, and old and new keys are determined based on the time.

S606 and S607: The MBSF-C first sends the multicast group identifier and the MTK 2 to the UDM, and then the UDM sends the multicast group identifier and the MTK 2 (that is, an example of a first message) to the (MB-)SMF (that is, an example of a third network element). Correspondingly, the (MB-)SMF receives the multicast group identifier and the MTK 2 that are sent by the MBSF-C or the UDM.

Optionally, the MBSF-C sends the KID 2 to the (MB-)SMF. Correspondingly, the (MB-)SMF receives the KID 2 from the MBSF-C.

It should be noted that information exchange for the key update between the MBSF-C, the MBSF-U, and the (MB-)SMF is arbitrary, in other words, the MBSF-C, the MBSF-U, and the (MB-)SMF may send a second multicast transmission key and/or the multicast group identifier to each other. For example, the MBSF-C directly sends the second multicast transmission key and/or the multicast group identifier to the (MB-)SMF, or the MBSF-C sends the second multicast transmission key and/or the multicast group identifier to the (MB-)SMF through the UDM or another network element. This is not limited in this application.

S608: The (MB-)SMF receives and stores the multicast group identifier and the KID 2. Optionally, the (MB-)SMF updates and deletes the MTK 1 and the KID 1 (namely, a first multicast transmission key and a first key identifier) that correspond to the multicast group identifier. The (MB-)SMF determines, based on the multicast group identifier, UE (that is, an example of a first terminal device) that has an authorization to join the multicast service corresponding to the multicast group identifier.

It should be noted that the UE determined by the (MB-)SMF is a terminal device that is authorized to use the service corresponding to the multicast group identifier. In other words, the target UE is a terminal device corresponding to a user authorized to join the multicast service.

It should be understood that the (MB-)SMF may search for a multicast session context based on the multicast group identifier, where the multicast session context records a list of authorized UEs.

It should be noted that, in a process in which the UE joins the multicast session, the (MB-)SMF adds the authorized UE to the list of authorized UEs. When the (MB-)SMF releases the multicast session, for example, when the (MB-)SMF receives a multicast authorization information change message sent by the UDM, the (MB-)SMF deletes a corresponding UE ID from the list of authorized UEs. A beneficial effect is that the (MB-)SMF always maintains an authorized UE list of a valid multicast session corresponding to the multicast group identifier, to facilitate the key update.

S609: The (MB-)SMF sends the multicast group identifier and the MTK 2 (that is, an example of a fourth message) to the UE 2 (that is, an example of the first terminal device).

Optionally, the fourth message may include the KID 2, where the KID 2 corresponds to the MTK 2, and the multicast group identifier corresponds to the MTK 2.

It should be noted that that a multicast transmission key corresponds to a multicast group identifier, and a multicast transmission key corresponds to a key identifier may be understood as follows: One multicast group may correspond to a plurality of multicast transmission keys, and one multicast transmission key corresponds to one multicast group identifier. In addition, the multicast transmission key and the key identifier are in a one-to-one correspondence, and can be used only by a corresponding multicast group. This meets a security isolation requirement of multicast data. In addition, a specific multicast group identifier and a specific service are also in a one-to-one correspondence.

It should be understood that a sending manner of the fourth message may be that the (MB-)SMF sends a NAS message to the UE 2 through an AMF. This is not limited in this application.

It should be further understood that the (MB-)SMF sends a unicast message to the UE 2. To avoid congestion, the (MB-)SMF may sequentially send the multicast group identifier, the MTK 2, and the KID 2 to the target UE 2 in a specific sequence.

It should be noted that, in this implementation, the UE 2 is used to describe a scenario in which the key update succeeds.

S610: The UE 2 receives the multicast group identifier, the MTK 2, and the KID 2. The UE 2 simultaneously stores two sets of old and new keys corresponding to the multicast group identifier, that is, the MTK 1 and the KID 1 and the MTK 2 and the KID 2, and marks the old and new keys.

For example, the MTK 1 and the KID 1 are marked as on_use, and the MTK 2 and the KID 2 are marked as new. For another example, the time for obtaining the MTKs and the KIDs is marked, and the old and new keys are determined based on the time.

It should be understood that this step indicates that the UE 2 does not obtain activation time of the MTK 2 and the KID 2 on a network side. Therefore, the UE 2 stores the two sets of old and new keys to avoid a problem that the UE 2 cannot parse multicast traffic, to avoid a packet loss and improve user experience.

S611: The (MB-)SMF sends the multicast group identifier, the MTK 2, and the KID 2 to the UE 1. A sending manner may be that the (MB-)SMF sends a NAS message to the UE 1 through the AMF. This is not limited herein.

It should be noted that the UE 1 is used herein to describe a scenario in which the key update fails. Herein, a cause of a key update failure may include a storage exception of a mobile phone, a poor radio link signal, the UE 1 being in an idle (idle) state, or the like. This is not limited in this application.

In steps S609 to S611, the scenario in which the key update succeeds and the scenario in which the key update fails are separately described by using UEs. In a specific implementation, the (MB-)SMF may simultaneously perform a multicast transmission modification process with the UE 1 and the UE 2 by using different transmission channels. Only two different scenarios are reflected herein, and there is no sequence between the two scenarios.

S612: The third network element determines activation time of the second multicast transmission key.

It should be understood that the third network element determines feedback time based on feedback information of the UE 1 and the UE 2. Specifically, the determining step is described in step S506. For brevity, details are not described herein again.

S613: The third network element sends an activation notification message (that is, an example of a fifth message) of the MTK 2 to the second network element in the activation time. Correspondingly, the second network element receives the activation notification message of the MTK 2 from the third network element.

It should be understood that, in step S612, the (MB-)SMF determines an activation occasion of the MTK 2 on a premise that for a specific service, all target UEs successfully receive the MTK 2 and the KID 2, or most (for example, 80%) target UEs successfully receive the MTK 2 and the KID 2. In this case, step S613 is performed, and the (MB-)SMF sends an activation notification of the MTK 2 to the MBSF-U.

S614: The MBSF-U activates and uses the key MTK 2, and determining logic may be as follows.

For example, the MBSF-U performs activation based on a local policy. For example, in step S604, the MBSF-U activates and uses the MTK 2 immediately after receiving the MTK 2. For another example, in step S604, the MBSF-U starts a timer after receiving the MTK 2, and activates and uses the MTK 2 before the timer expires.

For example, the MBSF-U performs activation based on activation indication information carried in a key update message in step S604. For example, the MBSF-C includes the timer and the like in the key update message in step S604.

For example, the MBSF-U performs activation based on the activation notification message in step S613. For example, the (MB-)SMF determines the activation time of the MTK 2. After determining, based on response messages for sending of the updated key to authorized UEs, that some or all of the authorized UEs obtain the updated key, the (MB-)SMF determines to initiate an activation message to the MBSF-U. The activation message may be forwarded by the MBSF-C, or may be directly sent by the (MB-)SMF to the MB SF-U. This is not limited in this application.

Optionally, in step S613, the activation notification message may carry a timer (timer). Because the (MB-)SMF has information about whether the authorized UE obtains the updated key, triggering and activating the key by the (MB-)SMF can ensure, as much as possible, that time at which the authorized UE obtains the updated key is earlier than the key activation time, and therefore provide user experience.

After deleting the MTK 1 and the KID 1, the MBSF-U marks the MTK 2 and the KID 2 as on_use.

Optionally, within a period of time, the MBSF-U generates two pieces of redundant data after separately performing security protection on the multicast data by using the two sets of old and new keys, and sends the two pieces of redundant data to the authorized UE. This can ensure that the authorized UE that does not perform update in time can still parse the multicast traffic, to avoid a packet loss and improve user experience.

In the foregoing steps S604 to S614, the determining logic for activating the key on the MBSF-U side includes: The MBSF-U activates and uses the key immediately or a period of time after receiving the new key (MTK 2), to simplify a key activation procedure. Alternatively, the MBSF-U activates and uses the key after receiving an indication message sent by the (MB-)SMF, to ensure, as much as possible, that an authorized user obtains the updated key, avoid a signaling storm, improve user experience, and reduce a packet loss rate. An action performed after the UE side receives the updated key includes: The UE temporarily stores the two keys and the two key identifiers after receiving the updated key, to ensure that a user can always parse the multicast data, improve user experience, and reduce a packet loss rate. Alternatively, the UE deletes the old key and the old key identifier after receiving a multicast data packet carrying the new key identifier, to reduce user resource occupation and release useless data.

S615: The MBSF-U sends the multicast data to the authorized UE, where the KID 2 and the multicast data packet on which security protection is performed are sent to the authorized UE together.

It should be understood that the KID 2 may be carried in a packet header, or may be carried at a fixed location in a load.

It should be noted that the second network element performs security protection on the multicast data by using the second multicast transmission key. A specific step is described in step S507, and details are not described herein again.

S616: After receiving the data packet, the UE 2 obtains and parses a KID 2 part in the data packet. The UE 2 searches for whether the KID 2 is stored in the multicast session. When the MTK 2 corresponding to the KID 2 is valid, the UE 2 performs undo security protection on the multicast data by using the MTK 2, and may delete the MTK 1 and the KID 1 after the undo security protection succeeds.

It should be noted that for a specific implementation in which the UE 2 performs undo security protection by using the second multicast transmission key, refer to step S508. Details are not described herein again.

Optionally, the KID 2 and the MTK 2 are marked as on_use.

It should be noted that, this step corresponds to the scenario of steps S609 and S610, that is, corresponds to the UE 2 that successfully obtains the updated key. In other words, in a specific implementation, when the scenario of steps S609 and S610 is met, the UE 2 may perform step S616.

S617: After receiving the data packet, the UE 1 obtains and parses a KID part in the data packet. The UE 1 searches for whether the KID 2 is stored in the multicast session. When the UE 1 does not find a valid key, the UE 1 is triggered to request a latest key from the network side.

It should be understood that, the UE 1 herein usually first parses a user plane data packet, and then triggers a signaling plane request after analysis and determining.

Optionally, when the UE 1 does not find the valid key, the UE 1 re-initiates a multicast session establishment procedure based on a local policy. In other words, the process is performed again from step S601. For example, the local policy may be that the UE 1 re-initiates the multicast session establishment procedure when time in which the UE 1 fails to find the key corresponding to the multicast data reaches a threshold.

S618: The UE 1 sends a key request message (that is, an example of a sixth message) to the (MB-)SMF, where the message carries the multicast group identifier.

It should be understood that a sending manner of the sixth message may be that after the UE sends a NAS message through the AMF, the AMF sends the request to the (MB-)SMF. This is not limited in this application. In this case, the sixth message is used to notify the (MB-)SMF that the UE cannot successfully parse the multicast data packet.

S619: After receiving the request of the UE 1, the (MB-)SMF searches for a key corresponding to the multicast group identifier, where the key is a key that is being used, that is, the MTK 2 and the KID 2, and sends the key to the UE 1. A sending manner may be that the (MB-)SMF sends a NAS message to the UE 1 through the AMF. This is not limited herein. Optionally, the message includes minimum validity time of the key, to indicate that the key is available within the validity time. This prevents an attacker from sending a false data packet to the UE 1 to enable the UE 1 to frequently initiate key request messages.

It should be noted that, this step corresponds to the scenario of steps S617 to S619, that is, corresponds to the UE 1 that fails to obtain the updated key. In other words, in a specific implementation, when the scenario of step S611 is met, the UE 2 may perform steps S617 to S619.

It should be further noted that steps S617 to S619 may be independent. In other words, when the network side does not perform steps S606 to S611, the UE 1 may obtain the updated key in a process of steps S617 to S619. A beneficial effect is that signaling overheads on the network side are reduced, but costs are that a signaling storm may occur, and a packet loss rate of the UE 1 is high.

In the foregoing step S617, an action performed after the UE side does not receive the updated key includes: The UE initiates a key request procedure after receiving a multicast data packet carrying an unknown key identifier, to ensure that the user re-obtains the updated key in a scenario in which the updated key is not obtained, improve user experience, and reduce a packet loss rate. Alternatively, the UE re-initiates a multicast session establishment procedure after receiving a multicast data packet carrying an unknown key identifier, to ensure that the user re-obtains the updated key in a scenario in which the updated key is not obtained, improve user experience, and reduce a packet loss rate.

Based on the foregoing possible implementation, the multicast key update method is provided by triggering a key update procedure by the MBSF-C and generating a key and a key identifier, to protect business interests of the service provider and improve system security. In an implementation of this application, a trigger condition for the key update is specified, and user experience is provided by storing the two keys on the UE side. In the scenario in which the update fails, the updated key may be re-obtained in a signaling plane manner.

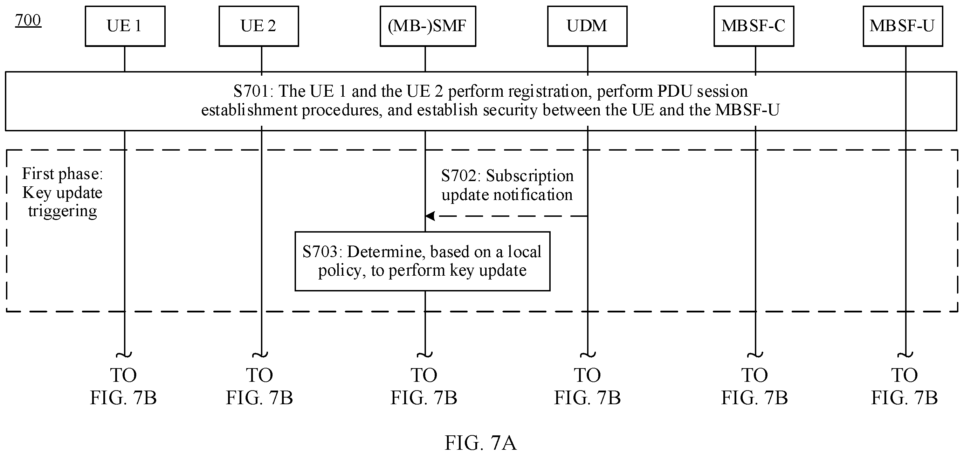

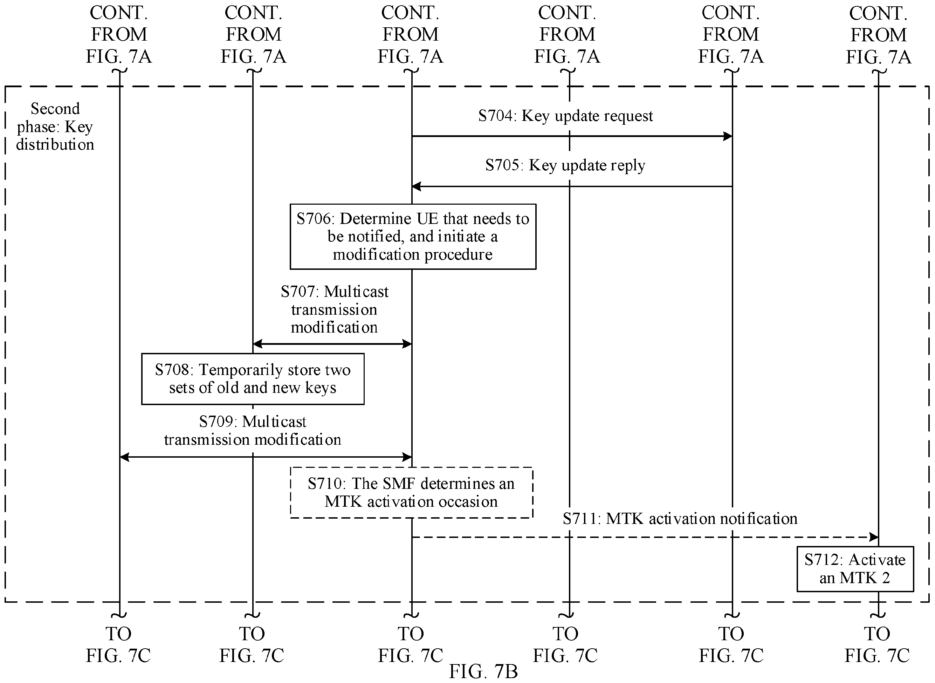

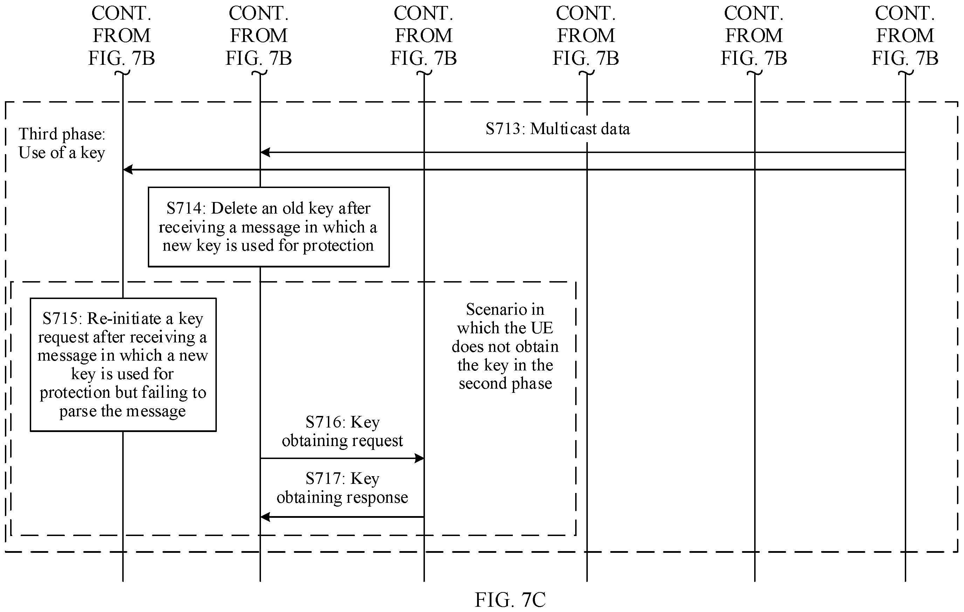

FIG. 7A to FIG. 7C are a schematic diagram of an example of a key update method applicable to this application. A difference between this specific implementation and the method 600 lies in: In the method 600, the MBSF-C directly triggers the key update procedure, and generates the key and the key identifier. In this specific implementation, an (MB-)SMF triggers a key update procedure, and sends a key update indication message to an MBSF-C, where the indication information indicates the MBSF-C to generate a key and a key identifier.

Key update in a 5G multicast service mainly includes key update triggering, updated key distribution and activation, and use of a key on a UE side.

It should be noted that a decision-making network element that triggers the key update may be one or more of the (MB-)SMF, the MBSF-C, an MBSF-U, and a UDM. As a multicast/broadcast service session management center, the MBSF-SMF has authorized user change information, and may be used as a decision-making network element, to prevent a user from parsing multicast data after an authorization is revoked, and provide system confidentiality. In this specific implementation, the MBSF-SMF is used as an example for description.

For updated key distribution, an updated key needs to be sent from the MBSF-C to the MBSF-U. Optionally, the key may alternatively be sent from a core network side to UE. It should be understood that a key activation process and a key distribution process on an MBSF-U side may be decoupled or coupled.

The use of the key on the UE side is described from two aspects: The UE successfully receives the updated key and the UE does not receive the updated key. As shown in FIG. 7A to FIG. 7C, step 700 includes the following steps.

S701: UE 1, UE 2, and UE n each establish a multicast session with a network, and establish security between the UE and the MBSF-U, where a key used between the UE and the MBSF-U is referred to as an MTK 1 and a KID 1. For a specific process, refer to the methods 200 and 300. Details are not described herein again.

S702: The (MB-)SMF subscribes to a notification service that is in the UDM and that is for a change of an authorization of a user that joins a multicast service corresponding to a multicast group identifier. After an AF sends a subscription update message to the UDM, the UDM sends a subscription update notification message to the (MB-)SMF.

For example, the subscription update notification message includes at least one of a list of users whose authorizations change (in other words, a list of user equipments whose authorizations change), the multicast group identifier, a quantity of users whose authorizations change (in other words, a quantity of user equipments whose authorizations change), and indication information indicating that the authorization changes, for example, a list of SUPIs.

Optionally, an attribute that is of the list and that is carried in the message may be authorization revocation.

S703: The (MB-)SMF (that is, an example of a third network element) triggers key update, and determining logic of triggering includes: The (MB-)SMF may determine, based on information about a user whose authorization is revoked, to trigger a key update procedure.

For example, the (MB-)SMF receives the subscription update notification message sent by the UDM, and parses the subscription update notification message to obtain the information about the user whose authorization is revoked. The information may be the multicast group identifier and the list of SUPIs. When a quantity of users in the list of SUPIs reaches a threshold, the key update procedure for the multicast group identifier is triggered.

It should be understood that the threshold herein may be set in advance. For example, the threshold is predefined in a local policy, and when the quantity of users in the list of SUPIs reaches 5, a key update action is triggered.

For example, the (MB-)SMF receives the subscription update notification message sent by the UDM, and parses the subscription update notification message to obtain the information about the user whose authorization is revoked. The information may be a quantity of users whose authorizations are revoked within a period of time for the multicast group identifier. The (MB-)SMF determines, based on the quantity of users, to trigger the key update procedure for the multicast group identifier.

It should be understood that the quantity of users herein may be set in advance. For example, the quantity of users is predefined in a local policy, and when the quantity of users whose authorizations are revoked within the period of time for the multicast group identifier reaches 10, a key update action is triggered.

For example, the (MB-)SMF receives the subscription update notification message sent by the UDM, and parses the subscription update notification message to obtain the information about the user whose authorization is revoked. The information may be a key update indication for the multicast group identifier. The (MB-)SMF triggers, based on indication information, the key update procedure for the multicast group identifier.

It should be understood that the indication information herein may be set in advance. For example, the indication information is predefined in a local policy, and 1 bit is used for explicit indication. For example, "1" indicates that triggering is required, and "0" indicates that triggering is not required. Alternatively, 1 bit is used for implicit indication, and " 1" is sent only when triggering is required. This is not limited in this application.

S704: The (MB-)SMF sends a key update indication message (that is, an example of a third message) to the MBSF-C (that is, an example of a first network element), where the indication message may be an independent message, or the key update indication is carried in an existing message. The indication message may further carry the multicast group identifier, to indicate the MBSF-C to perform key update for the multicast group identifier.

S705: The MBSF-C receives the key update indication message, and parses the key update indication message to obtain the carried multicast group identifier. The key update indication message triggers the MBSF-C to generate an updated key and an updated key identifier, namely, an MTK 2 and a KID 2, for the multicast session corresponding to the multicast group identifier. The MBSF-C sends a key update response message to the (MB-)SMF, where the message carries the MTK 2 and the KID 2.

It should be noted that that a multicast transmission key corresponds to a multicast group identifier, and a multicast transmission key corresponds to a key identifier may be understood as follows: One multicast group may correspond to a plurality of multicast transmission keys, and one multicast transmission key corresponds to one multicast group identifier. In addition, the multicast transmission key and the key identifier are in a one-to-one correspondence, and can be used only by a corresponding multicast group. This meets a security isolation requirement of multicast data. In addition, a specific multicast group identifier and a specific service are also in a one-to-one correspondence.

Subsequent steps S706 to S717 are the same as steps S608 to S619 in the foregoing specific implementation. For brevity, details are not described herein again.

Based on the foregoing possible implementation, the multicast key update method is provided. The MBSF-SMF triggers the key update procedure, and sends the indication information to the MBSF-C, to indicate the MBSF-C to generate the key and the key identifier, so that a key update problem in a user change scenario can be resolved. It can be ensured that the network can trigger key update in the authorized user change scenario.

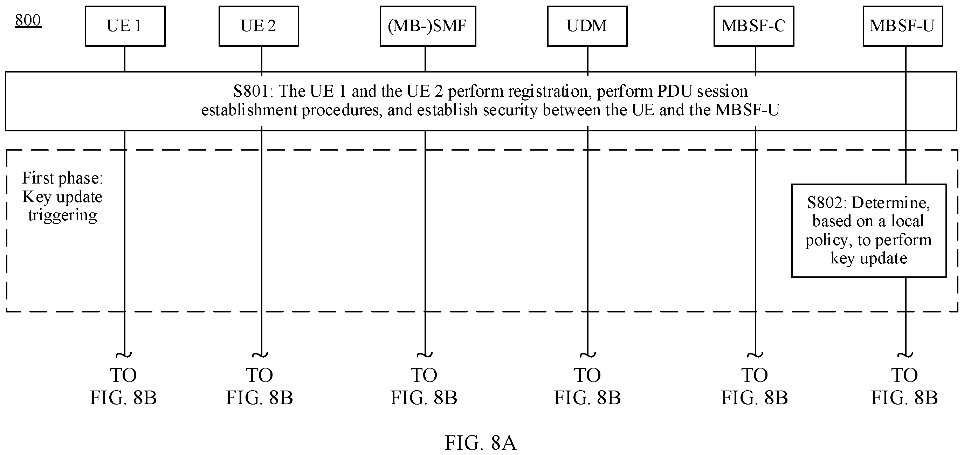

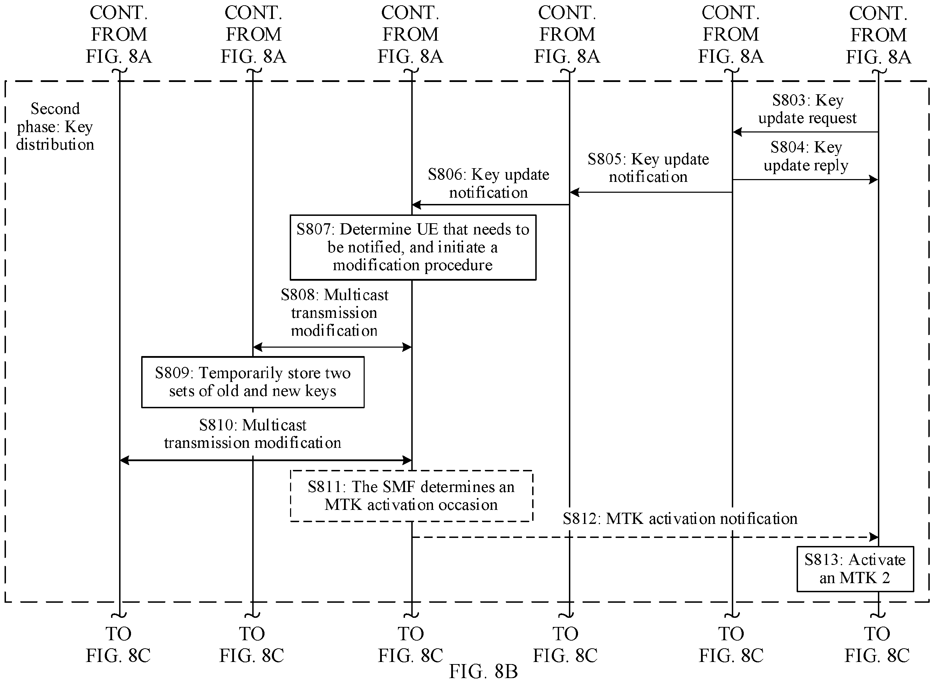

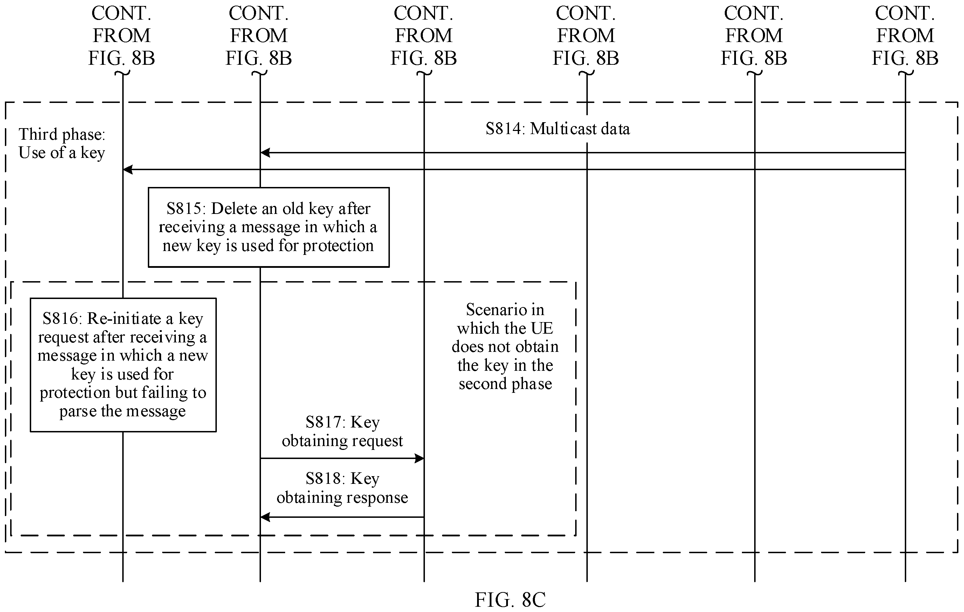

FIG. 8A to FIG. 8C are a schematic diagram of an example of a key update method applicable to this application. A difference between this specific implementation and the methods 600 and 700 lies in: In the method 600, the MBSF-C directly triggers the key update procedure, and generates the key and the key identifier. In the method 700, the (MB-)SMF triggers the key update procedure, and sends the key update indication message to the MBSF-C, where the indication information indicates the MBSF-C to generate the key and the key identifier. In this specific implementation, an (MB)-U triggers a key update procedure, and sends a key update indication message to an MBSF-C, where the indication information indicates the MBSF-C to generate a key and a key identifier.

Key update in a 5G multicast service mainly includes key update triggering, updated key distribution and activation, and use of a key on a UE side.

It should be noted that a decision-making network element that triggers the key update may be one or more of an (MB-)SMF, the MBSF-C, the MBSF-U, and a UDM. The MBSF-U is a subject that uses a key, has statistical information such as a use frequency of the key, a quantity of use times of the key, and use time of the key, and may be used as a decision-making network element, to prevent the key from being cracked by an attacker and provide system confidentiality. In this specific implementation, the MBSF-U is used as an example for description.

For updated key distribution, an updated key needs to be sent from the MBSF-C to the MBSF-U. Optionally, the key may alternatively be sent from a core network side to UE. It should be understood that a key activation process and a key distribution process on an MBSF-U side may be decoupled or coupled. The use of the key on the UE side is described from two aspects: The UE successfully receives the updated key and the UE does not receive the updated key. As shown in FIG. 8A to FIG. 8C, step 800 includes the following steps.

S801: UE 1, UE 2, and UE n each establish a multicast session with a network, and establish security between the UE and the MBSF-U, where a key used between the UE and the MBSF-U is referred to as an MTK 1 and a KID 1. For a specific process, refer to the methods 200 and 300. Details are not described herein again.

S802: The MBSF-U (that is, an example of a second network element) triggers a key update procedure, and determining logic of triggering includes: The MBSF-U may trigger the key update procedure based on a security rule.

For example, after use time of the MTK corresponding to a multicast group identifier reaches a threshold, key update needs to be triggered. A specific action may be as follows: After receiving the MTK or using the MTK for the first time, the MBSF-U triggers a timer, where the timer may be bound to the multicast group identifier. After the timer expires, the MBSF-U determines to perform key update for the multicast session corresponding to the multicast group identifier.

For example, after a quantity of use times of the MTK corresponding to a multicast group identifier reaches a threshold, key update needs to be triggered. A specific action may be as follows: After using the MTK for the first time, the MBSF-U triggers a counter, where the counter may be bound to the multicast group identifier. After the counter expires, the MBSF-U determines to perform key update for the multicast session corresponding to the multicast group identifier.

For example, when a leakage risk exists or leakage already occurs for the MTK that is being used, key update needs to be triggered. A specific action may be as follows: The MBSF-U receives an indication message from another network element, where the message carries related information. After receiving the message, the MBSF-U determines to perform key update for the multicast session corresponding to the multicast group identifier.

It should be understood that the threshold herein may be set in advance. For example, the threshold is predefined in a local policy. When the use time of the MTK exceeds 1 hour, or the quantity of use times of the MTK reaches 5, a key update action is triggered.

S803: The MBSF-U sends a key update indication message (that is, an example of a third message) to the MBSF-C (that is, an example of a first network element), where the indication message may be an independent message, or the key update indication is carried in an existing message. The indication message may further carry the multicast group identifier, to indicate the MBSF-C to perform key update for the multicast group identifier.

S804: The MBSF-C receives the key update indication message, and parses the key update indication message to obtain the carried multicast group identifier. The key update indication message triggers the MBSF-C to generate an updated key and an updated key identifier, namely, an MTK 2 and a KID 2, for the multicast session corresponding to the multicast group identifier. The MBSF-C sends a key update response message to the MBSF-U, where the message carries the MTK 2 and the KID 2.

It should be noted that that a multicast transmission key corresponds to a multicast group identifier, and a multicast transmission key corresponds to a key identifier may be understood as follows: One multicast group may correspond to a plurality of multicast transmission keys, and one multicast transmission key corresponds to one multicast group identifier. In addition, the multicast transmission key and the key identifier are in a one-to-one correspondence, and can be used only by a corresponding multicast group. This meets a security isolation requirement of multicast data. In addition, a specific multicast group identifier and a specific service are also in a one-to-one correspondence.

Subsequent steps S805 to S818 are the same as steps S606 to S619 in the foregoing specific implementation. For brevity, details are not described herein again.

Based on the foregoing possible implementation, the multicast key update method is provided. The MBSF-U triggers the key update procedure, and sends the indication information to the MBSF-C, to indicate the MBSF-C to generate the key and the key identifier, so that a key update problem under a security rule requirement can be resolved, and it can be ensured that a network security level meets the security rule requirement.

It should be noted that, in embodiments of this application, a key generation network element may be an MBSF-C, an (MB-)SMF, an MBSF-U, an AUSF, or another network element. In this application, the MBSF-C is used as an example for description. This is not limited in this application. In addition, in embodiments of this application, an update key sent by the key generation network element to the (MB-)SMF or the MBSF-U may be a key original text, or may be a key update parameter. This is not limited in this application. In addition, in embodiments of this application, an entity that triggers key update may be one or more of the (MB-)SMF, the MBSF-C, the MBSF-U, and a UDM. For example, the (MB-)SMF/UDM triggers key update based on an authorized user change, and the MBSF-C/MBSF-U triggers key update based on a security rule (for example, a key use periodicity). Both entities may trigger key update. This is not limited in this application.

In conclusion, according to the solutions in embodiments of this application, a multicast key update method is provided. A key update procedure is triggered by the MBSF-C, the MBSF-SMF, or the MBSF-U, to enable the MBSF-C to generate a key and a key identifier. This can resolve a key update problem in an authorized user information change scenario and a security rule scenario, specify a trigger condition for key update, provide user experience by storing two keys on a UE side, ensure that an updated key can be re-obtained in a signaling plane manner in an update failure scenario, protect business interests of a service provider, and improve system security.

It should be understood that the foregoing process for key update by the decision-making network element is merely an example for description, and this application is not limited thereto. Another method and process that can implement key update by the decision-making network element (for example, the UDM or another network element) fall within the protection scope of this application.

The foregoing describes in detail key update methods in embodiments of this application, and the following describes key update apparatuses in embodiments of this application.

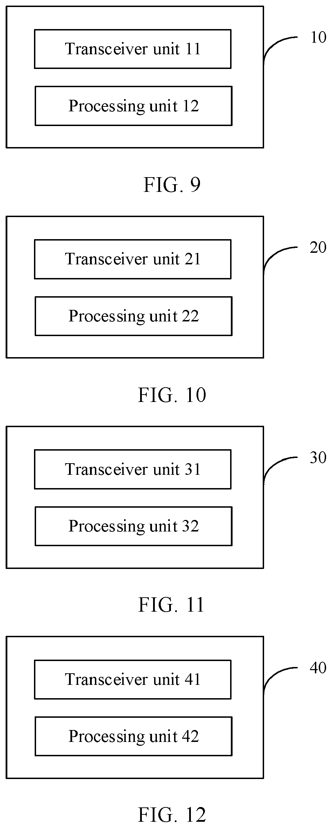

According to the foregoing methods, FIG. 9 is a schematic diagram of a communication apparatus 10 (which may also be a terminal device, for example, UE 1 or UE 2) applicable to an embodiment of this application. As shown in FIG. 9, the communication apparatus 10 includes a transceiver unit 11 and a processing unit 12.

For example, the transceiver unit 11 is configured to receive a fourth message from a third network element, where the fourth message includes a second multicast transmission key and a multicast group identifier, the second multicast transmission key is an updated key of a first multicast transmission key, and the fourth message indicates to update a multicast transmission key corresponding to the multicast group identifier to the second multicast transmission key.

The transceiver unit 11 is further configured to receive multicast data from a second network element.

The processing unit 12 is configured to perform undo security protection on the multicast data based on the second message.

For example, the transceiver unit 11 is configured to receive multicast data and a second key identifier, where the multicast data corresponds to a second multicast transmission key.

The processing unit 12 is configured to determine, based on the second key identifier, that the second multicast transmission key corresponding to the second key identifier does not exist.

The transceiver unit 11 is further configured to send a sixth message to a third network element, where the sixth message includes a multicast group identifier, and the sixth message is used to request the second multicast transmission key corresponding to the multicast group identifier.

The transceiver unit 11 is further configured to receive the second multicast transmission key from the third network element.

It should be understood that the communication apparatus 10 may correspond to the terminal device in the key update method 500/600/700/800 in embodiments of this application. The communication apparatus 10 may include modules (or units) configured to perform the method performed by the terminal device in FIG. 5/FIG. 6A to FIG. 6C/FIG. 7A to FIG. 7C/FIG. 8A to FIG. 8C. In addition, the modules (or units) in the communication apparatus 10 and the foregoing other operations and/or functions are separately used to implement corresponding procedures of the key update method 500/600/700/800 in FIG. 5/FIG. 6A to FIG. 6C/FIG. 7A to FIG. 7C/FIG. 8A to FIG. 8C.

For example, the transceiver unit 11 is configured to perform S505 and S507, or S609, S611, S615, S618, and S619, or S707, S709, S713, S716, and S717, or S808, S810, S814, S817, and S818 in the method 500/600/700/800. The processing unit 12 is configured to perform S508, or S610, S616, and S617, or S708, S714, and S715, or S809, S815, and S816 in the method 500/600/700/800. A process of performing the corresponding steps by the modules (or units) has been described in detail in the method 500/600/700/800. For brevity, details are not described herein again.

It should be understood that a structure of the apparatus 10 shown in FIG. 9 is merely a possible form, but should not constitute any limitation to this embodiment of this application. A possibility of a terminal device in another form that may appear in the future is not excluded in this application.

It should be understood that the communication apparatus 10 in this embodiment of this application may correspond to the terminal device for key update in the foregoing method embodiments, and the foregoing and other management operations and/or functions of the modules (or units) in the communication apparatus 10 are separately used to implement corresponding steps of the foregoing methods. Therefore, beneficial effects in the foregoing method embodiments can also be implemented.

It should be further understood that, in this embodiment of this application, the processing module (or unit) may be implemented by a processor, and the transceiver module (or unit) may be implemented by a transceiver.

According to the foregoing methods, FIG. 10 is a schematic diagram of a communication apparatus 20 (which may also be a network device, for example, a third network element (MB-)SMF) applicable to an embodiment of this application. As shown in FIG. 10, the communication apparatus 20 includes a transceiver unit 21 and a processing unit 22.

For example, the transceiver unit 21 is configured to receive a second multicast transmission key and a multicast group identifier, where the second multicast transmission key is an updated key of a first multicast transmission key.

The transceiver unit 21 is further configured to send a fourth message to a first terminal device that has an authorization to join a multicast service corresponding to the multicast group identifier, where the fourth message indicates to update a multicast transmission key corresponding to the multicast group identifier to the second multicast transmission key, and the fourth message includes the second multicast transmission key and the multicast group identifier.

It should be understood that the communication apparatus 20 may correspond to the network device in the key update method 500/600/700/800 in embodiments of this application. The communication apparatus 20 may include modules (or units) configured to perform the method performed by the terminal device in FIG. 5/FIG. 6A to FIG. 6C/FIG. 7A to FIG. 7C/FIG. 8A to FIG. 8C. In addition, the modules (or units) in the communication apparatus 20 and the foregoing other operations and/or functions are separately used to implement corresponding procedures of the key update method 500/600/700/800 in FIG. 5/FIG. 6A to FIG. 6C/FIG. 7A to FIG. 7C/FIG. 8A to FIG. 8C.

For example, the transceiver unit 21 is configured to perform S504, or S607, S609, S611, S618, and S619, or S702, S704, S705, S707, S709, S711, S716, and S717, or S806, S808, S810, S817, and S818 in the method 500/600/700/800. The processing unit 22 is configured to perform S504, or S608 and S612, or S703, S706 and S710, or S807 and S811 in the method 500/600/700/800. A process of performing the corresponding steps by the modules (or units) has been described in detail in the method 500/600/700/800. For brevity, details are not described herein again.

It should be understood that a structure of the apparatus 20 shown in FIG. 10 is merely a possible form, but should not constitute any limitation to this embodiment of this application. A possibility of a network device in another form that may appear in the future is not excluded in this application.

It should be understood that the communication apparatus 20 in this embodiment of this application may correspond to the network device for key update in the foregoing method embodiments, and the foregoing and other management operations and/or functions of the modules (or units) in the communication apparatus 20 are separately used to implement corresponding steps of the foregoing methods. Therefore, beneficial effects in the foregoing method embodiments can also be implemented.

It should be further understood that, in this embodiment of this application, the processing module (or unit) may be implemented by a processor, and the transceiver module (or unit) may be implemented by a transceiver.

According to the foregoing methods, FIG. 11 is a schematic diagram of a communication apparatus 30 (which may also be a network device, for example, a first network element MBSF-C) applicable to an embodiment of this application. As shown in FIG. 11, the communication apparatus 30 includes a transceiver unit 31 and a processing unit 32.

For example, the transceiver unit 31 is configured to send a first message, where the first message includes a second multicast transmission key and a multicast group identifier, and the first message indicates to update a multicast transmission key corresponding to the multicast group identifier to the second multicast transmission key.

The processing unit 32 is configured to generate the second multicast transmission key, where the second multicast transmission key is an updated key of a first multicast transmission key.

It should be understood that the communication apparatus 30 may correspond to the network device in the key update method 500/600/700/800 in embodiments of this application. The communication apparatus 30 may include modules (or units) configured to perform the method performed by the terminal device in FIG. 5/FIG. 6A to FIG. 6C/FIG. 7A to FIG. 7C/FIG. 8A to FIG. 8C. In addition, the modules (or units) in the communication apparatus 30 and the foregoing other operations and/or functions are separately used to implement corresponding procedures of the key update method 500/600/700/800 in FIG. 5/FIG. 6A to FIG. 6C/FIG. 7A to FIG. 7C/FIG. 8A to FIG. 8C.

For example, the transceiver unit 31 is configured to perform S502 and S503, or S602, S604, S605, and S606, or S704 and S705, or S803 and S804 in the method 500/600/700/800. The processing unit 32 is configured to perform S501 or S603 in the method 500/600/700/800. A process of performing the corresponding steps by the modules (or units) has been described in detail in the method 600/700/800. For brevity, details are not described herein again.

It should be understood that a structure of the apparatus 30 shown in FIG. 11 is merely a possible form, but should not constitute any limitation to this embodiment of this application. A possibility of a network device in another form that may appear in the future is not excluded in this application.

It should be understood that the communication apparatus 30 in this embodiment of this application may correspond to the network device for key update in the foregoing method embodiments, and the foregoing and other management operations and/or functions of the modules (or units) in the communication apparatus 30 are separately used to implement corresponding steps of the foregoing methods. Therefore, beneficial effects in the foregoing method embodiments can also be implemented.

It should be further understood that, in this embodiment of this application, the processing module (or unit) may be implemented by a processor, and the transceiver module (or unit) may be implemented by a transceiver.

According to the foregoing methods, FIG. 12 is a schematic diagram of a communication apparatus 40 (which may also be a network device, for example, a second network element MBSF-U) applicable to an embodiment of this application. As shown in FIG. 12, the communication apparatus 40 includes a transceiver unit 41 and a processing unit 42.

For example, the transceiver unit 41 is configured to receive a second multicast transmission key, where the second multicast transmission key is an updated key of a first multicast transmission key.

The processing unit 42 is configured to perform security protection on multicast data by using the second multicast transmission key.

The transceiver unit 41 is further configured to send the multicast data to a first terminal device.

It should be understood that the communication apparatus 40 may correspond to the terminal device in the key update method 500/600/700/800 in embodiments of this application. The communication apparatus 40 may include modules (or units) configured to perform the method performed by the terminal device in FIG. 5/FIG. 6A to FIG. 6C/FIG. 7A to FIG. 7C/FIG. 8A to FIG. 8C. In addition, the modules (or units) in the communication apparatus 40 and the foregoing other operations and/or functions are separately used to implement corresponding procedures of the key update method 500/600/700/800 in FIG. 5/FIG. 6A to FIG. 6C/FIG. 7A to FIG. 7C/FIG. 8A to FIG. 8C.

For example, the transceiver unit 41 is configured to perform S502 and S507, or S604, S605, and S615, or S711 and S713, or S803, S804, and S814 in the method 500/600/700/800. The processing unit 42 is configured to perform S506, or S614, or S712, or S802 and S813 in the method 500/600/700/800. A process of performing the corresponding steps by the modules (or units) has been described in detail in the method 500/600/700/800. For brevity, details are not described herein again.

It should be understood that a structure of the apparatus 40 shown in FIG. 12 is merely a possible form, but should not constitute any limitation to this embodiment of this application. A possibility of a network device in another form that may appear in the future is not excluded in this application.

It should be understood that the communication apparatus 40 in this embodiment of this application may correspond to the network device for key update in the foregoing method embodiments, and the foregoing and other management operations and/or functions of the modules (or units) in the communication apparatus 40 are separately used to implement corresponding steps of the foregoing methods. Therefore, beneficial effects in the foregoing method embodiments can also be implemented.

It should be further understood that, in this embodiment of this application, the processing module (or unit) may be implemented by a processor, and the transceiver module (or unit) may be implemented by a transceiver.

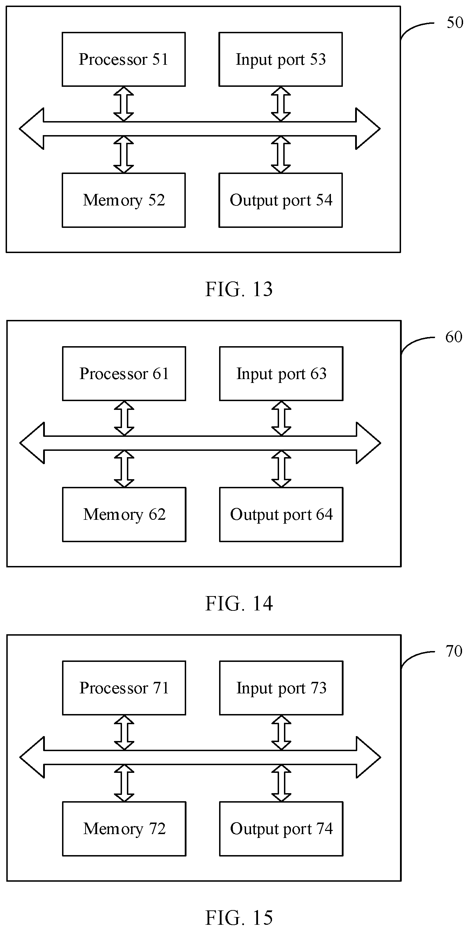

According to the foregoing methods, FIG. 13 is a schematic diagram of a communication apparatus (which may also be referred to as a terminal device) 50 according to an embodiment of this application. As shown in FIG. 13, the apparatus 50 may be a terminal device (for example, UE 1 or UE 2), or may be a chip or a circuit, for example, a chip or a circuit that may be disposed in a network device.

The apparatus 50 may include a processor 51 (that is, an example of a processing unit) and a memory 52. The memory 52 is configured to store instructions, and the processor 51 is configured to execute the instructions stored in the memory 52, so that the apparatus 50 implements the steps performed by the terminal device (for example, the UE 1 or the UE 2) in the foregoing method (for example, the method 500/600/700/800).

Optionally, the apparatus 50 may further include an input port 53 (that is, an example of a communication unit) and an output port 54 (that is, another example of the communication unit). It should be understood that the processor 51, the memory 52, the input port 53, and the output port 54 may communicate with each other through an internal connection path, to transmit a control signal and/or a data signal.

The memory 52 is configured to store a computer program. The processor 51 may be configured to invoke the computer program from the memory 52 and run the computer program, to control the input port 53 to receive a signal and control the output port 54 to send a signal, to complete the steps performed by the network device in the foregoing methods.

The memory 52 may be integrated into the processor 51, or the memory 52 and the processor 51 may be disposed separately.

Optionally, if the apparatus 50 is a network device, the input port 53 is a receiver, and the output port 44 is a transmitter. The receiver and the transmitter may be a same physical entity or different physical entities. When the receiver and the transmitter are the same physical entity, the receiver and the transmitter may be collectively referred to as a transceiver.

Optionally, if the apparatus 50 is a chip or a circuit, the input port 53 is an input interface, and the output port 54 is an output interface.

In an implementation, it may be considered that functions of the input port 53 and the output port 54 are implemented by using a transceiver circuit or a dedicated transceiver chip. It may be considered that the processor 51 is implemented by using a dedicated processing chip, a processing circuit, a processor, or a general-purpose chip.

In another implementation, it may be considered that the network device provided in this embodiment of this application is implemented by using a general-purpose computer. To be specific, program code for implementing functions of the processor 51, the input port 53, and the output port 54 is stored in the memory 52, and a general-purpose processor implements the functions of the processor 51, the input port 53, and the output port 54 by executing the code in the memory 52.

In this embodiment of this application, the processor 51 is configured to perform undo security protection on multicast data based on a fourth message.

The input port 53 is configured to receive the fourth message from a third network element, where the fourth message indicates to update a multicast transmission key corresponding to a multicast group identifier to a second multicast transmission key, the fourth message includes the second multicast transmission key and the multicast group identifier, and the fourth multicast transmission key is an updated key of a first multicast transmission key.

The input port 53 is further configured to receive the multicast data from a second network element.

Optionally, the apparatus 50 is configured in or is a terminal device.

The foregoing listed functions and actions of the modules or units in the apparatus 50 are merely examples for description. The modules or units in the apparatus 50 may be configured to perform actions or processing processes performed by the terminal device in the method 500/600/700/800. To avoid repetition, detailed descriptions are omitted herein.

For example, the processor 51 may perform an action performed by the UE 1 and/or the UE 2 in S508, or S610, S616, and S617, or S708, S714, and S715, or S809, S815, and S816.

For concepts, explanations, detailed descriptions, and other steps of the apparatus 50 that are related to the technical solutions provided in embodiments of this application, refer to the descriptions of the content in the foregoing method embodiments or another embodiment. Details are not described herein again.

In a possible implementation, with development of a system-on-chip (System-on-chip, SoC) technology, all or some functions of the apparatus 50 are implemented by using the SoC technology, for example, implemented by using a terminal device function chip. The terminal device function chip integrates components such as a processor, a memory, and a communication interface. A program of a function related to the terminal device is stored in the memory. The processor executes the program to implement a function related to user equipment. Optionally, the terminal device function chip can also read from a memory outside the chip to implement a function related to the user equipment.

It should be understood that a structure of the apparatus 50 shown in FIG. 13 is merely a possible form, but should not constitute any limitation to this embodiment of this application. A possibility of a user equipment structure in another form that may appear in the future is not excluded in this application.

According to the foregoing methods, FIG. 14 is a schematic diagram of a communication apparatus (which may also be referred to as a network device) 60 according to an embodiment of this application. As shown in FIG. 14, the apparatus 60 may be a network device (for example, a third network element (MB-)SMF), or may be a chip or a circuit, for example, a chip or a circuit that may be disposed in the network device.

The apparatus 60 may include a processor 61 (that is, an example of a processing unit) and a memory 62. The memory 62 is configured to store instructions, and the processor 61 is configured to execute the instructions stored in the memory 62, so that the apparatus 60 implements the steps performed by the network device (for example, the (MB-)SMF) in the foregoing method (for example, the method 500/600/700/800).

Optionally, the apparatus 60 may further include an input port 63 (that is, an example of a communication unit) and an output port 64 (that is, another example of the communication unit). It should be understood that the processor 61, the memory 62, the input port 63, and the output port 64 may communicate with each other through an internal connection path, to transmit a control signal and/or a data signal.

The memory 62 is configured to store a computer program. The processor 61 may be configured to invoke the computer program from the memory 62 and run the computer program, to control the input port 63 to receive a signal and control the output port 64 to send a signal, to complete the steps performed by the network device in the foregoing methods.

The memory 62 may be integrated into the processor 61, or the memory 62 and the processor 61 may be disposed separately.

Optionally, if the apparatus 60 is a network device, the input port 63 is a receiver, and the output port 64 is a transmitter. The receiver and the transmitter may be a same physical entity or different physical entities. When the receiver and the transmitter are the same physical entity, the receiver and the transmitter may be collectively referred to as a transceiver.

Optionally, if the apparatus 60 is a chip or a circuit, the input port 63 is an input interface, and the output port 64 is an output interface.

In an implementation, it may be considered that functions of the input port 63 and the output port 64 are implemented by using a transceiver circuit or a dedicated transceiver chip. It may be considered that the processor 61 is implemented by using a dedicated processing chip, a processing circuit, a processor, or a general-purpose chip.

In another implementation, it may be considered that the network device provided in this embodiment of this application is implemented by using a general-purpose computer. To be specific, program code for implementing functions of the processor 61, the input port 63, and the output port 64 is stored in the memory 62, and a general-purpose processor implements the functions of the processor 61, the input port 63, and the output port 64 by executing the code in the memory 62.

In this embodiment of this application, the input port 63 is configured to receive a second multicast transmission key and a multicast group identifier, where the second multicast transmission key is an updated key of a first multicast transmission key.

The output port 64 is configured to send a fourth message to a first terminal device that has an authorization to join a multicast service corresponding to the multicast group identifier, where the fourth message indicates to update a multicast transmission key corresponding to the multicast group identifier to the second multicast transmission key, and the fourth message includes the second multicast transmission key and the multicast group identifier.

Optionally, the apparatus 60 is configured in or is a multicast/broadcast session management function (MB-)SMF network element.

The foregoing listed functions and actions of the modules or units in the apparatus 60 are merely examples for description. The modules or units in the apparatus 60 may be configured to perform actions or processing processes performed by the network device in the method 500/600/700/800. To avoid repetition, detailed descriptions are omitted herein.

For example, the processor 61 may perform an action performed by the (MB-)SMF in S504, or S608 and S612, or S703, S706 and S710, or S807 and S811.

For concepts, explanations, detailed descriptions, and other steps of the apparatus 60 that are related to the technical solutions provided in embodiments of this application, refer to the descriptions of the content in the foregoing method embodiments or another embodiment. Details are not described herein again.

In a possible implementation, with development of a system-on-chip (System-on-chip, SoC) technology, all or some functions of the apparatus 60 are implemented by using the SoC technology, for example, implemented by using a network device function chip. The network device function chip integrates components such as a processor, a memory, and a communication interface. A program of a function related to the network device is stored in the memory. The processor executes the program to implement a function related to a base station. Optionally, the network device function chip can also read from a memory outside the chip to implement a function related to the base station.

It should be understood that a structure of the apparatus 60 shown in FIG. 14 is merely a possible form, but should not constitute any limitation to this embodiment of this application. A possibility of a base station structure in another form that may appear in the future is not excluded in this application.

According to the foregoing methods, FIG. 15 is a schematic diagram of a communication apparatus (which may also be referred to as a network device) 70 according to an embodiment of this application. As shown in FIG. 15, the apparatus 70 may be a network device (for example, a first network element MBSF-C), or may be a chip or a circuit, for example, a chip or a circuit that may be disposed in the network device.

The apparatus 70 may include a processor 71 (that is, an example of a processing unit) and a memory 72. The memory 72 is configured to store instructions, and the processor 71 is configured to execute the instructions stored in the memory 72, so that the apparatus 70 implements the steps performed by the network device (for example, the MBSF-C) in the foregoing method (for example, the method 500/600/700/800).

Optionally, the apparatus 70 may further include an input port 73 (that is, an example of a communication unit) and an output port 74 (that is, another example of the communication unit). It should be understood that the processor 71, the memory 72, the input port 73, and the output port 74 may communicate with each other through an internal connection path, to transmit a control signal and/or a data signal.

The memory 72 is configured to store a computer program. The processor 71 may be configured to invoke the computer program from the memory 72 and run the computer program, to control the input port 73 to receive a signal and control the output port 74 to send a signal, to complete the steps performed by the network device in the foregoing methods.

The memory 72 may be integrated into the processor 71, or the memory 72 and the processor 71 may be disposed separately.

Optionally, if the apparatus 70 is a network device, the input port 73 is a receiver, and the output port 74 is a transmitter. The receiver and the transmitter may be a same physical entity or different physical entities. When the receiver and the transmitter are the same physical entity, the receiver and the transmitter may be collectively referred to as a transceiver.

Optionally, if the apparatus 70 is a chip or a circuit, the input port 73 is an input interface, and the output port 74 is an output interface.

In an implementation, it may be considered that functions of the input port 73 and the output port 74 are implemented by using a transceiver circuit or a dedicated transceiver chip. It may be considered that the processor 71 is implemented by using a dedicated processing chip, a processing circuit, a processor, or a general-purpose chip.

In another implementation, it may be considered that the network device provided in this embodiment of this application is implemented by using a general-purpose computer. To be specific, program code for implementing functions of the processor 71, the input port 73, and the output port 74 is stored in the memory 72, and a general-purpose processor implements the functions of the processor 71, the input port 73, and the output port 74 by executing the code in the memory 72.

In this embodiment of this application, the processor 71 is configured to generate a second multicast transmission key, where the second multicast transmission key is an updated key of a first multicast transmission key.

The output port 74 is configured to send a first message, where the first message includes the second multicast transmission key and a multicast group identifier, and the first message indicates to update a multicast transmission key corresponding to the multicast group identifier to the second multicast transmission key.

Optionally, the apparatus 70 is configured in or is a multicast/broadcast service function-control plane MBSF-C.

The foregoing listed functions and actions of the modules or units in the apparatus 70 are merely examples for description. The modules or units in the apparatus 70 may be configured to perform actions or processing processes performed by the network device in the method 500/600/700/800. To avoid repetition, detailed descriptions are omitted herein.

For example, the processor 71 may perform an action performed by the MBSF-C in S501 or S603.

For concepts, explanations, detailed descriptions, and other steps of the apparatus 70 that are related to the technical solutions provided in embodiments of this application, refer to the descriptions of the content in the foregoing method embodiments or another embodiment. Details are not described herein again.

In a possible implementation, with development of a system-on-chip (System-on-chip, SoC) technology, all or some functions of the apparatus 70 are implemented by using the SoC technology, for example, implemented by using a network device function chip. The network device function chip integrates components such as a processor, a memory, and a communication interface. A program of a function related to the network device is stored in the memory. The processor executes the program to implement a function related to a base station. Optionally, the network device function chip can also read from a memory outside the chip to implement a function related to the base station.

It should be understood that a structure of the apparatus 70 shown in FIG. 15 is merely a possible form, but should not constitute any limitation to this embodiment of this application. A possibility of a base station structure in another form that may appear in the future is not excluded in this application.

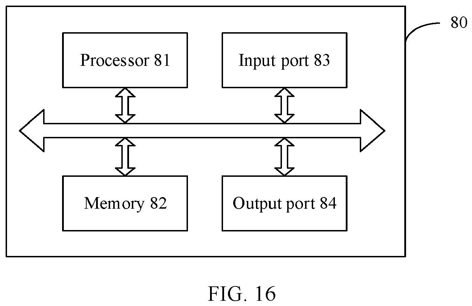

According to the foregoing methods, FIG. 16 is a schematic diagram of a communication apparatus (which may also be referred to as a network device) 80 according to an embodiment of this application. As shown in FIG. 16, the apparatus 80 may be a network device

(for example, a second network element MBSF-U), or may be a chip or a circuit, for example, a chip or a circuit that may be disposed in the network device.

The apparatus 80 may include a processor 81 (that is, an example of a processing unit) and a memory 82. The memory 82 is configured to store instructions, and the processor 81 is configured to execute the instructions stored in the memory 62, so that the apparatus 60 implements the steps performed by the network device (for example, the MBSF-U) in the foregoing method (for example, the method 500/600/700/800).

Optionally, the apparatus 80 may further include an input port 83 (that is, an example of a communication unit) and an output port 84 (that is, another example of the communication unit). It should be understood that the processor 81, the memory 82, the input port 83, and the output port 84 may communicate with each other through an internal connection path, to transmit a control signal and/or a data signal.

The memory 82 is configured to store a computer program. The processor 81 may be configured to invoke the computer program from the memory 82 and run the computer program, to control the input port 83 to receive a signal and control the output port 84 to send a signal, to complete the steps performed by the network device in the foregoing methods.

The memory 82 may be integrated into the processor 81, or the memory 82 and the processor 81 may be disposed separately.

Optionally, if the apparatus 80 is a network device, the input port 83 is a receiver, and the output port 84 is a transmitter. The receiver and the transmitter may be a same physical entity or different physical entities. When the receiver and the transmitter are the same physical entity, the receiver and the transmitter may be collectively referred to as a transceiver.

Optionally, if the apparatus 80 is a chip or a circuit, the input port 83 is an input interface, and the output port 84 is an output interface.

In an implementation, it may be considered that functions of the input port 83 and the output port 84 are implemented by using a transceiver circuit or a dedicated transceiver chip. It may be considered that the processor 81 is implemented by using a dedicated processing chip, a processing circuit, a processor, or a general-purpose chip.

In another implementation, it may be considered that the network device provided in this embodiment of this application is implemented by using a general-purpose computer. To be specific, program code for implementing functions of the processor 81, the input port 83, and the output port 84 is stored in the memory 82, and a general-purpose processor implements the functions of the processor 81, the input port 83, and the output port 84 by executing the code in the memory 82.

In this embodiment of this application, the input port 83 is configured to receive a second multicast transmission key, where the second multicast transmission key is an updated key of a first multicast transmission key. The processor 81 is configured to perform security protection on multicast data by using the second multicast transmission key.

The output port 84 is configured to send the multicast data to a first terminal device.

Optionally, the apparatus 80 is configured in or is a multicast/broadcast service function-user plane MBSF-U.

The foregoing listed functions and actions of the modules or units in the apparatus 80 are merely examples for description. The modules or units in the apparatus 80 may be configured to perform actions or processing processes performed by the network device in the method 500/600/700/800. To avoid repetition, detailed descriptions are omitted herein.

For example, the processor 81 may perform an action performed by the MBSF-U in S506, or S614, or S712, or S802 and S813.

For concepts, explanations, detailed descriptions, and other steps of the apparatus 80 that are related to the technical solutions provided in embodiments of this application, refer to the descriptions of the content in the foregoing method embodiments or another embodiment. Details are not described herein again.

In a possible implementation, with development of a system-on-chip (System-on-chip, SoC) technology, all or some functions of the apparatus 80 are implemented by using the SoC technology, for example, implemented by using a network device function chip. The network device function chip integrates components such as a processor, a memory, and a communication interface. A program of a function related to the network device is stored in the memory. The processor executes the program to implement a function related to a base station. Optionally, the network device function chip can also read from a memory outside the chip to implement a function related to the base station.

It should be understood that a structure of the apparatus 80 shown in FIG. 16 is merely a possible form, but should not constitute any limitation to this embodiment of this application. A possibility of a base station structure in another form that may appear in the future is not excluded in this application.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

It should be further understood that "first", "second", and the like mentioned in this specification are merely used for distinction to describe the technical solutions of this application clearer, and should not constitute any limitation on this application.

Terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may perform communication by using a local process and/or a remote process and based on, for example, a signal with one or more data packets (for example, data from two components interacting with another component in a local system, a distributed system, and/or across a network such as the internet interacting with another system by using the signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A key update method, comprising:
generating a second multicast transmission key, wherein the second multicast transmission key is an updated key of a first multicast transmission key; and
sending a first message, wherein the first message comprises the second multicast transmission key and a multicast group identifier, and the first message indicates to update a multicast transmission key corresponding to the multicast group identifier to the second multicast transmission key.

2. The method according to claim 1, wherein the generating a second multicast transmission key comprises:
generating the second multicast transmission key when an authorization of a user that joins a multicast service corresponding to the multicast group identifier changes.

3. The method according to claim 1 or 2, wherein the method further comprises:
receiving a second message, wherein the second message indicates that the authorization of the user that joins the multicast service corresponding to the multicast group identifier changes.

4. The method according to claim 3, wherein the second message comprises at least one of a list of users whose authorizations change, the multicast group identifier, a quantity of users whose authorizations change, and indication information indicating that the authorization changes.

5. The method according to any one of claims 1 to 4, wherein the method further comprises:
subscribing to a notification service for the change of the authorization of the user that joins the multicast service corresponding to the multicast group identifier.

6. The method according to claim 1, wherein the generating a second multicast transmission key comprises:
generating the second multicast transmission key when a preset condition is met.

7. The method according to claim 6, wherein the preset condition comprises at least one of the following: use time of the multicast transmission key corresponding to the multicast group identifier reaches preset time, a quantity of use times reaches a preset quantity of times, a leakage risk exists in use, or leakage already occurs.

8. The method according to any one of claims 1 to 7, wherein the first message further comprises a second key identifier, and the second key identifier corresponds to the second multicast transmission key.

9. The method according to any one of claims 1 to 8, wherein the method further comprises:
receiving a third message, wherein the third message indicates to generate the second multicast transmission key; and
the generating a second multicast transmission key comprises:
generating the second multicast transmission key based on the third message.

10. The method according to any one of claims 1 to 9, wherein the method is performed by a multicast service function-control plane network element, and the sending a first message comprises:
sending, by the multicast service function-control plane network element, the first message to a multicast service function-user plane network element; or
sending, by the multicast service function-control plane network element, the first message to a multicast session management function network element.

11. A key update method, comprising:
receiving a second multicast transmission key and a multicast group identifier, wherein the second multicast transmission key is an updated key of a first multicast transmission key; and
sending a fourth message to a first terminal device that has an authorization to join a multicast service corresponding to the multicast group identifier, wherein the fourth message indicates to update a multicast transmission key corresponding to the multicast group identifier to the second multicast transmission key, and the fourth message comprises the second multicast transmission key and the multicast group identifier.

12. The method according to claim 11, wherein the receiving a second multicast transmission key and a multicast group identifier comprises:
receiving a first message from a first network element, wherein the first message comprises the second multicast transmission key and the multicast group identifier, and the first message indicates to update the multicast transmission key corresponding to the multicast group identifier to the second multicast transmission key.

13. The method according to claim 11 or 12, wherein the method further comprises:
receiving a second message, wherein the second message indicates that an authorization of a user that joins the multicast service corresponding to the multicast group identifier changes.

14. The method according to claim 13, wherein the second message comprises at least one of a list of users whose authorizations change, the multicast group identifier, a quantity of users whose authorizations change, and indication information indicating that the authorization changes.

15. The method according to any one of claims 11 to 14, wherein the method further comprises:
sending a third message to the first network element when the authorization of the user that joins the multicast service corresponding to the multicast group identifier changes, wherein the third message indicates the first network element to generate the second multicast transmission key, and the third message comprises at least one of the multicast group identifier, authorized user change information, and indication information for updating the first multicast transmission key.

16. The method according to any one of claims 11 to 15, wherein the method further comprises:
sending a fifth message to a second network element, wherein the fifth message indicates the second network element to activate the second multicast transmission key.

17. The method according to claim 16, wherein the sending a fifth message to a second network element comprises:
determining activation time of the second multicast transmission key; and
sending the fifth message to the second network element in the activation time.

18. The method according to any one of claims 11 to 17, wherein the method further comprises:
receiving a response message for the fourth message from the first terminal device; and
determining the activation time of the second multicast transmission key based on the response message.

19. The method according to any one of claims 11 to 18, wherein the fourth message further comprises a second key identifier, and the second key identifier corresponds to the second multicast transmission key.

20. The method according to any one of claims 11 to 19, wherein the method further comprises:
receiving a sixth message from the first terminal device, wherein the sixth message comprises the multicast group identifier, and the sixth message is used to request the second multicast transmission key corresponding to the multicast group identifier; and
sending the second multicast transmission key to the first terminal device.

21. A key update method, comprising:
receiving a second multicast transmission key, wherein the second multicast transmission key is an updated key of a first multicast transmission key;
performing security protection on multicast data by using the second multicast transmission key; and
sending the multicast data to a first terminal device.

22. The method according to claim 21, wherein the receiving a second multicast transmission key comprises:
receiving a first message from a first network element, wherein the first message comprises the second multicast transmission key and a multicast group identifier, and the first message indicates to update a multicast transmission key corresponding to the multicast group identifier to the second multicast transmission key.

23. The method according to claim 21 or 22, wherein the first message further comprises a second key identifier, and the second key identifier corresponds to the second multicast transmission key.

24. The method according to any one of claims 21 to 23, wherein the method further comprises:
sending a third message to the first network element when a preset condition is met, wherein the third message indicates the first network element to generate the second multicast transmission key.

25. The method according to claim 24, wherein the preset condition comprises at least one of the following: use time of the multicast transmission key corresponding to the multicast group identifier reaches preset time, a quantity of use times reaches a preset quantity of times, a leakage risk exists in use, or leakage already occurs.

26. The method according to any one of claims 21 to 25, wherein the method further comprises:
receiving a fifth message from a third network element, wherein the fifth message indicates a second network element to activate the second multicast transmission key; and
activating the second multicast transmission key based on the fifth message.

27. A key update method, comprising:
receiving a fourth message from a third network element, wherein the fourth message comprises a second multicast transmission key and a multicast group identifier, the second multicast transmission key is an updated key of a first multicast transmission key, and the fourth message indicates to update a multicast transmission key corresponding to the multicast group identifier to the second multicast transmission key;
receiving multicast data from a second network element; and
performing undo security protection on the multicast data based on the fourth message.

28. The method according to claim 27, wherein the method further comprises:
storing the second multicast transmission key and the first multicast transmission key.

29. The method according to claim 27 or 28, wherein the method further comprises:
deleting the first multicast transmission key after performing undo security protection on the multicast data based on the fourth message.

30. The method according to any one of claims 27 to 29, wherein the fourth message further comprises a second key identifier, and the second key identifier corresponds to the second multicast transmission key.

31. A key update method, comprising:
receiving multicast data and a second key identifier, wherein the multicast data corresponds to a second multicast transmission key;
determining, based on the second key identifier, that the second multicast transmission key corresponding to the second key identifier does not exist;
sending a sixth message to a third network element, wherein the sixth message comprises a multicast group identifier, and the sixth message is used to request the second multicast transmission key corresponding to the multicast group identifier; and
receiving the second multicast transmission key from the third network element.

32. A key update apparatus, comprising:
a unit configured to implement the method according to any one of claims 1 to 10.

33. A key update apparatus, comprising:
a unit configured to implement the method according to any one of claims 11 to 20.

34. A key update apparatus, comprising:
a unit configured to implement the method according to any one of claims 21 to 26.

35. A key update apparatus, comprising:
a unit configured to implement the method according to any one of claims 27 to 31.

36. A communication system, comprising:
a network device according to any one of claims 1 to 10;
a network device according to any one of claims 11 to 20;
a network device according to any one of claims 21 to 26; or
a terminal device according to any one of claims 27 to 31.

37. A computer-readable storage medium, wherein
the computer-readable storage medium stores a computer program; and when the computer program is run,
a computer is enabled to perform the method according to any one of claims 1 to 10;
a computer is enabled to perform the method according to any one of claims 11 to 20;
a computer is enabled to perform the method according to any one of claims 21 to 26; or
a computer is enabled to perform the method according to any one of claims 27 to 31.

38. A chip, comprising a processor, configured to invoke a computer program from a memory and run the computer program,
to enable a communication apparatus on which the chip is installed to perform the method according to any one of claims 1 to 10;
to enable a communication apparatus on which the chip is installed to perform the method according to any one of claims 11 to 20;
to enable a communication apparatus on which the chip is installed to perform the method according to any one of claims 21 to 26; or
to enable a communication apparatus on which the chip is installed to perform the method according to any one of claims 27 to 31.

39. A computer program product, wherein when the computer program product is executed on a computer,
the computer is enabled to perform the method according to any one of claims 1 to 10;
the computer is enabled to perform the method according to any one of claims 11 to 20;
the computer is enabled to perform the method according to any one of claims 21 to 26; or
the computer is enabled to perform the method according to any one of claims 27 to 31.
